# EUROPEAN PATENT SPECIFICATION

(11) **EP 1 459 888 B1**
(45) Date of publication and mention of the grant of the patent: **07.11.2007**
(21) Application number: 04006700.1
(22) Date of filing: 19.03.2004
(51) Int. Cl.: B41C 1/10

(54) **Planographic printing plate precursor**
Flachdruckplattenvorläufer
Précurseur de plaque d'impression planographique

(30) Priority: 20.03.2003 JP 2003078699; 04.11.2003 JP 2003374189
(43) Date of publication of application: 22.09.2004
(73) Proprietor: FUJIFILM Corporation, Minato-ku Tokyo (JP)
(72) Inventor: Takahashi, Miki, Yoshida-cho, Haibara-gun, Shizuoka-ken (JP); Sasaki, Hidehito, Yoshida-cho, Haibara-gun, Shizuoka-ken (JP); Hotta, Hisashi, Yoshida-cho, Haibara-gun, Shizuoka-ken (JP)
(74) Representative: HOFFMANN EITLE

(56) References cited:
- EP-A- 0 871 070
- EP-A- 0 992 850
- EP-A- 1 276 013
- PATENT ABSTRACTS OF JAPAN vol. 1998, no. 08, 30 June 1998 (1998-06-30) & JP 10 069092 A (FUJI PHOTO FILM CO LTD), 10 March 1998 (1998-03-10)

## Description

### BACKGROUND OF THE INVENTION

### Field of the Invention

The present invention relates to a positive planographic printing plate precursor in which an image can be recorded by exposure to infrared laser light and the solubility of an exposed area of a recording layer is changed. More particularly, the invention relates to a positive planographic printing plate precursor which is recordable by exposure to near infrared region light such as infrared laser light, allows direct plate-making from digital signals of a computer or the like, has high printing durability, and is free from the occurrence of scumming in a non-image area.

### Description of the Related Art

Along with the recent development of solid lasers and semiconductor lasers having a light emitting region in the near-infrared to infrared region, attention has been focused on systems using these infrared lasers as a system for making a plate directly from digital data of computers.

For example, a positive planographic printing plate material for direct plate-making using an infrared laser is disclosed in Japanese Patent Application Laid-Open (JP-A) No. 7-285275. This invention is an image recording material produced by adding a material which absorbs light to generate heat and a positive photosensitive compound such as a quinonediazide compound to a resin soluble in an aqueous alkali solution. The positive photosensitive compound works as a dissolution inhibitor which substantially decreases the solubility of the resin soluble in an aqueous alkali solution in an image area. In a non-image area, the photosensitive compound is decomposed by heat, and does not exhibit dissolution inhibitive ability so that it can be removed by developing to thereby form an image.

Onium salts and compounds which can form a hydrogen bond network having poor alkali-solubility are known to have an effect of inhibiting dissolution of an alkali-soluble polymer in an alkali solution. As image recording materials used with an infrared laser, it is disclosed in, for example, WO97/39894 that a composition using a cationic infrared absorbing dye as a dissolution inhibitor for an alkali solution soluble polymer exhibits a positive mechanism. The positive mechanism in this image recording material refers to a the mechanism in which the infrared absorbing dye absorbs laser light to make the irradiated area of the polymer layer lose the dissolution inhibitive effect due to the generated heat to thereby form an image.

As regards a support used in such a planographic printing plate precursor, studies have been made for making the surface of the support hydrophilic to prevent the non-image area from being contaminated. For example, in the case of using a metal support such as an aluminum plate, various technologies have been reported including a method using an anodized aluminum substrate (support) and a method in which the anodized aluminum substrate is subjected to silicate treatment to raise hydrophilicity. However, various treatments for improving hydrophilicity are not necessarily superior in improving affinity to a recording layer, posing the problem that the adhesion of the support to the recording layer to be formed thereon is decreased and the recording layer peels off under harsh printing conditions, with the result that insufficient printing durability is obtained.

For this reason, a method has been proposed in which various intermediate layers are disposed between a support and a recording layer to improve the adhesion of the surface of the hydrophilicized support to the recording layer. In such a method, materials having functional groups having high affinity to resin materials constituting the recording layer and to the surface of the support are used for intermediate layers, whereby adhesion in an image area is improved and satisfactory printing durability is therefore obtained. However, there is the problem that in a non-image area, the recording layer is not removed rapidly during developing but remains as a residual layer on the surface of the support, and ink adheres to the residual layer, causing the non-image area to be contaminated. For this reason, a support is desired which has high surface hydrophilicity and satisfies both the adhesion to the recording layer in an image area and the removability of the recording layer in a non-image area.

In order to solve the above problems, the present inventors have proposed a planographic printing plate provided with an intermediate layer including a high-molecular compound containing a specific structural unit such as p-vinylbenzoic acid, in JP-A No. 10-69092. The inventors have also proposed a planographic printing plate precursor provided with an intermediate layer containing a polymer (random polymer) comprising a monomer having an acidic group, and a monomer having an onium group in JP-A No. 2000-108538. These inventions have certain improved effects. However, it is desired at present to improve the adhesion between the support and the recording layer to thereby further improve printing durability and to also effectively suppress the occurrence of scumming in a non-image area.

EP-A-0 871 070 relates to a positive working photosensitive lithographic printing plate comprising an aluminium substrate having an alumina layer and a water-wettable layer on its surface; an intermediate layer containing a polymer and a positive working photosensitive layer. The polymer in the intermediate layer comprises a unit (A) which interacts with the alumina layer on the aluminium substrate and a unit (B) which interacts with the water-wettable layer on the aluminium substrate. Unit (A) may be derived from a monomer having an acid group, whilst unit (B) may be derived from a monomer having an onium group.

EP-A-0 992 850 discloses a planographic printing plate comprising a support subjected to hydrophilization treatment, an intermediate layer containing a polymer including a monomer unit having an acid group and a monomer unit having an onium group and a photosensitive layer comprising a positive-type photosensitive composition sensitive to infrared radiation.

EP-A-1 276 013 concerns a method for manufacturing a lithographic printing plate comprising imagewise exposing a presensitized plate having an intermediate layer comprising a polymer which includes an acid-containing unit and an onium group- containing unit, the intermediate layer being dispose between a photosensitive layer and an aluminium substrate, and developing the imagewise exposed plate with a developer comprising an inorganic alkali salt and a nonionic surfactant containing a polyoxyalkylene ether group.

### SUMMARY OF THE INVENTION

In consideration of the circumstances described above, an object of the present invention is to provide a planographic printing plate precursor which enables direct plate-making by scanning exposure based on digital signals, has high printing durability and is free from the occurrence of scumming in a non-image area.

The present inventors, as a result of intensive investigations, have found that the above object of the invention can be achieved by disposing an intermediate layer containing a polymer having a specific structure at its side chain between a support and a recording layer, to thereby completed the invention.

Accordingly, the planographic printing plate precursor of the present invention comprises an intermediate layer containing a polymer (hereinafter, referred to as a "specific polymer" in some cases) having a structure represented by the following formula (I) at its side chain and an infrared laser photosensitive positive recording layer containing an infrared absorbing agent disposed on a support in this order.

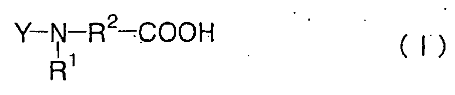

In the formula (I), Y represents a connecting group connected with a main chain of the polymer; R¹ represents a hydrocarbon group substituted with a carboxylic acid group; and R² represents a straight-chain hydrocarbon group or a hydrocarbon group substituted with a carboxylic acid group.

Here, the term "disposed on a support in this order" indicates that the intermediate layer and the recording layer are disposed in this order on the support, and it does not deny the existence of other layers (e.g., a protective layer or a back coat layer) provided according to specific purposes.

The actual mechanism of the invention is believed to be as follows.

It is considered that the specific polymer contained in the intermediate layer of the present invention can be firmly interacted with the surface of the support since it has the structure represented by the formula (I), and that the adhesion of the support to the recording layer is improved, enabling to improved printing durability.

It is also considered that in an infrared laser photosensitive positive recording layer, a reaction does not extend to the vicinity of the surface of a support because of heat diffusion to the support during exposure, sometimes resulting in deterioration of a removability of the recording layer in a non-image area. In contrast, it is considered that since the specific polymer of the present invention has high dissociability from a developing solution, the occurrence of scumming in a non-image area is suppressed effectively.

According to the present invention, a planographic printing plate precursor which enables direct plate-making by scanning exposure based on digital signals, has high printing durability and is free from the occurrence of scumming in a non-image area is provided.

### DETAILED DESCRIPTION OF THE INVENTION

The present invention will be hereinafter explained in detail.

The invention provides a planographic printing plate precursor comprising an intermediate layer containing a polymer having a structure represented by the following formula (I) at its side chain and an infrared laser photosensitive positive recording layer containing an infrared absorbing agent disposed on a support in this order.

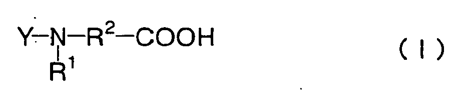

In the formula (I), Y represents a connecting group connected with a main chain of the polymer; R¹ represents a hydrocarbon group substituted with a carboxylic acid group; and R² represents a straight-chain hydrocarbon group or hydrocarbon group substituted with a carboxylic acid group. (Intermediate layer)

The intermediate layer containing a polymer (specific polymer) having a structure represented by the above formula (I) at its side chain will be explained.

### (Structure represented by formula (I))

In the formula (I), Y represents a connecting group connected with a main chain of the polymer. Examples of the connecting group represented by Y include substituted or unsubstituted divalent hydrocarbon groups. The hydrocarbon group may have one or more partial structures containing one or more heteroatoms selected from the group consisting of an oxygen atom, a nitrogen atom and a sulfur atom.

In the formula (I), R¹ represents a hydrocarbon group substituted with a carboxylic acid group.

As the hydrocarbon group represented by R¹, hydrocarbon groups having 1 to 30 carbon atoms are preferable. The hydrocarbon group is preferably an alkyl group or an aryl group among these hydrocarbon groups.

The most preferable embodiments of R¹ are an alkyl group and an aryl group substituted with a carboxylic acid group.

Specific examples of the alkyl group represented by R¹ include straight-chain, branched or cyclic alkyl groups having 1 to 30 carbon atoms such as methyl group, ethyl group, propyl group, butyl group, pentyl group, hexyl group, heptyl group, octyl group, nonyl group, decyl group, undecyl group, dodecyl group, tridecyl group, hexadecyl group, octadecyl group, eicosyl group, isopropyl group, isobutyl group, sec-butyl group, tert-butyl group, isopentyl group, neopentyl group, 1-methylbutyl group, isohexyl group, 2-ethylhexyl group, 2-methylhexyl group, cyclopentyl group, cyclohexyl group, 1-adamtyl group and 2-norbornyl.

The aryl groups represented by R¹ include those in which 2 to 4 benzene rings form a condensed ring and those in which a benzene ring and an unsaturated five-membered ring form a condensed ring.

Specific examples of the aryl group represented by R¹ include aryl groups having 6 to 30 carbon atoms such as phenyl group, naphthyl group, anthryl group, phenanthryl group, indenyl group, acenabutenyl group, fluorenyl group and pyrenyl group.

In the formula (I), R² represents a straight-chain hydrocarbon group or a hydrocarbon group substituted with a carboxylic acid group. R² may be substituted with one or more further substituents. Examples of the substituent introducible into R¹ include monovalent nonmetal atomic groups except for a hydrogen atom. Specific examples of these nonmetal atomic group include a halogen atom (-F, -Br, -Cl and -I), hydroxyl group, alkoxy group, aryloxy group, mercapto group, alkylthio group, arylthio group, alkyldithio group, aryldithio group, amino group, N-alkylamino group, N,N-dialkylamino group, N-arylamino group, N,N-diarylamino group, N-alkyl-N-arylamino group, acyloxy group, carbamoyloxy group, N-alkylcarbamoyloxy group, N-arylcarbamoyloxy group, N,N-dialkylcarbamoyloxy group, N,N-diarylcarbamoyloxy group, N-alkyl-N-arylcarbamoyloxy group, alkylsulfoxy group, arylsulfoxy group, acylthio group, acylamino group, N-alkylacylamino group, N-arylacylamino group, ureide group, N'-alkylureide group, N',N'-dialkylureide group, N'-arylureide group, N',N'-diarylureide group, N'-alkyl-N'-arylureide group, N-alkylureide group, N-arylureide group, N'-alkyl-N-alkylureide group, N'-alkyl-N-arylureide group, N',N'-dialkyl-N-alkylureide group, N',N'-dialkyl-N-arylureide group, N'-aryl-N-alkylureide group, N'-aryl-N-arylureide group, N',N'-diaryl-N-alkylureide group and N',N'-diaryl-N-arylureide group, N'-alkyl-N'-aryl-N-alkylureide group, N'-alkyl-N'-aryl-N-arylureide group, alkoxycarbonylamino group, aryloxycarbanylamino group, N-alkyl-N-alkoxycarbonylamino group, N-alkyl-N-aryloxycarbonylamino group, N-aryl-N-alkoxycarbonylamino group, N-aryl-N-aryloxycarbonylamino group, formyl group, acyl group, carboxyl group and group comprising salt thereof, alkoxycarbonyl group, aryloxycarbonyl group, carbamoyl group, N-alkylcarbamoyl group, N,N-dialkylcarbamoyl group, N-arylcarbamoyl group, N,N-diarylcarbamoyl group, N-alkyl-N-arylcarbamoyl group, alkylsulfinyl group, arylsulfinyl group, alkylsulfonyl group, arylsulfonyl group, sulfo group (-SO₃H) and group comprising salt thereof, alkoxysulfonyl group, aryloxysulfonyl group, sulfinamoyl group, N-alkylsulfinamoyl group, N,N-dialkylsulfinamoyl group, N-arylsulfinamoyl group, N,N-diarylsulfinamoyl group, N-alkyl-N-arylsulfinamoyl group, sulfamoyl group, N-alkylsulfamoyl group, N,N-dialkylsulfamoyl group, N-arylsulfamoyl group, N,N-diarylsulfamoyl group, N-alkyl-N-arylsulfamoyl group, N-acylsulfamoyl group and group comprising salt thereof, N-alkylsulfonylsulfamoyl group (-SO₂NHSO₂(alkyl)) and group comprising salt thereof, N-arylsulfonylsulfamoyl group (-SO₂NHSO₂(aryl)) and group comprising salt thereof and N-alkylsulfonylcarbamoyl group (-CONHSO₂(alkyl)) or group comprising salt thereof, N-arylsulfonylcarbamoyl group (-CONHSO₂(aryl)) and group comprising salt thereof, alkoxysilyl group (-Si(Oalkyl)₃), aryloxysilyl group (-Si(Oaryl)₃), hydroxysilyl group (-Si(OH)₃) and group comprising salt thereof, phosphono group (-PO₃H₂) and group comprising salt thereof, dialkylphosphono group (-PO₃(alkyl)₂), diarylphosphono group (-PO₃(aryl)₂), alkylarylphosphono group (-PO₃(alkyl)(aryl) monoalkylphosphono group (-PO₃H(alkyl)) and group comprising salt thereof, monoarylphosphono group (-PO₃H(aryl)) and group comprising salt thereof, phosphonooxy group (-OPO₃H₂) and group comprising salt thereof, dialkylphosphonooxy group (-OPO₃(alkyl)₂), diarylphosphonooxy group (-OPO₃(aryl)₂), alkylarylphosphonooxy group (-OPO₃(alkyl)(aryl)), monoalkylphosphonooxy group (-OPO₂H(alkyl)) and group comprising salt thereof, monoarylphosphonooxy group (-OPO₃H(aryl)) and group comprising salt thereof, cyano group, nitro group, aryl group, alkyl group, alkenyl group and alkinyl group.

As the substituent introducible into R² among the above examples, a carboxyl group and group comprising salt thereof, an alkoxycarbonyl group and an aryloxycarbonyl group are preferable and a carboxyl group and group comprising salt thereof are particularly preferable.

Preferable examples of R² include an alkylene group and a phenylene group which may have a substituent. Specific examples of the hydrocarbon group include straight-chain or branched alkylene groups such as a methylene group, ethylene group, propylene group, butylene group, isopropylene group and isobutylene group and phenylene group. More preferable embodiments of the hydrocarbon group include the above alkylene groups substituted with a carboxylic acid group.

The carboxylic acid group in the formula (I) may form an alkali metal salt or an ammonium salt.

The most preferable structure of the formula (I) is the case where R¹ is an alkyl group substituted with a carboxylic acid group and R²is a straight-chain alkylene group.

As a method of introducing the structure represented by the formula (I) into the side chain of the polymer, for example, a monomer having the structure represented by the formula (I) may be polymerized or copolymerized using a known method. Other methods include a method in which a polyp-aminostyrene is reacted with chloroacetic acid and a method in which a polychloromethylstyrene is reacted with iminodiacetonitrile, followed by hydrolysis. The method in which a monomer having the structure represented by the formula (I) is polymerized or copolymerized using a known method is preferable from the viewpoint of controlling the rate of introduction of the structure represented by the formula (I) more easily.

When the specific polymer is a copolymer, it may be any of a random copolymer, block copolymer and graft copolymer.

The synthesis of the specific polymer may be accomplished by radical polymerization using an initiator such as peroxides such as di-t-butyl peroxide and benzoyl peroxide, persulfates such as ammonium persulfate and azo compounds such as azobisisobutyronitrile. The initiator is properly selected according to a polymerization system to be applied. As the polymerization system, solution polymerization, emulsion polymerization or suspension polymerization is applied.

Examples of the polymerization solvent to be used in the synthesis include, though not limited to, acetone, methyl ethyl ketone, methanol, ethanol, propanol, ethylene glycol monomethyl ether, ethylene glycol monoethyl ether, diethylene glycol dimethyl ether, 1-methoxy-2-propanol, 2-methoxyethyl acetate, 1-methoxy-2-propyl acetate, dimethoxyethane, methyl lactate, ethyl lactate, ethyl acetate, N,N-dimethylacetamide, N,N-dimethylformamide, dimethylsulfoxide, tetrahydrofuran, toluene and water.

Specific examples of the monomer having the structure represented by the formula (I) include the following compounds. However, these examples are not intended to limit the invention.

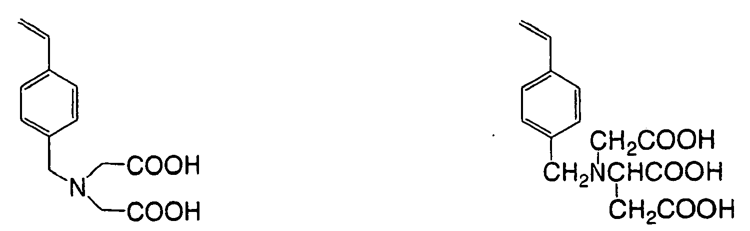

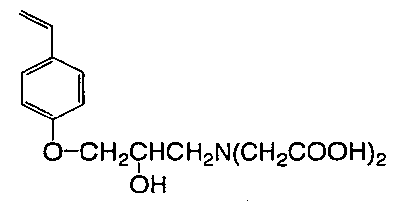

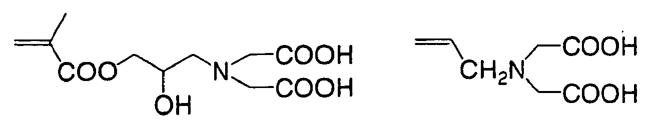

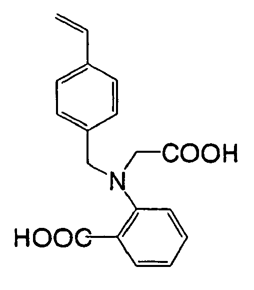

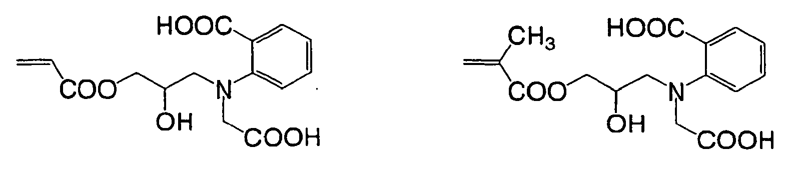

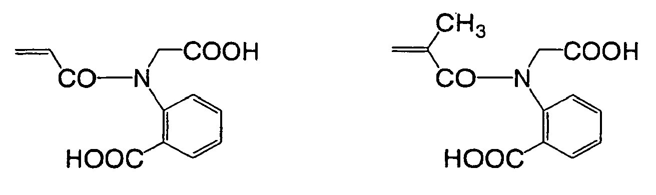

As the monomer having the structure represented by the formula (I), a monomer having the structure represented by the following formula (I-a) is more preferable.

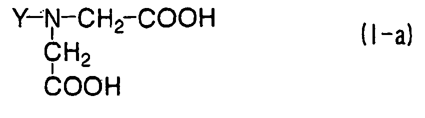

Also, preferable examples of the structure of the connecting group connected with the main chain of the polymer represented by Y include the following structures.

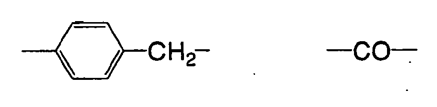

A content of the structure represented by the formula (I) in the specific polymer is preferably 5% by mole or more and more preferably 20% by mole or more from the viewpoint of exhibiting the effect of improving printing durability by an interaction with an aluminum support sufficiently.

The weight average molecular weight of the specific polymer of the present invention is preferably 500 to 1,000,000 and more preferably 1,000 to 500,000.

### (Other monomer components)

The specific polymer of the present invention may be polymerized with other monomer components for the purpose of more strengthening the interaction with the support or the interaction with the recording layer. Examples of the other monomer components include "monomers having an onium group" from the viewpoint of improving adhesion to a hydrophilically treated substrate, "monomers having an acidic group " from the viewpoint of improving adhesion to a hydrophilically treated substrate and from the viewpoint of improving solubility in a developing solution and "monomers having a functional group which can interact with the recording layer" from the viewpoint of improving adhesion to the recording layer.

### <Monomer having an onium group>

Examples of the monomer having an onium group may include, though not limited to, the monomers represented by the following formulae (A) to (C).

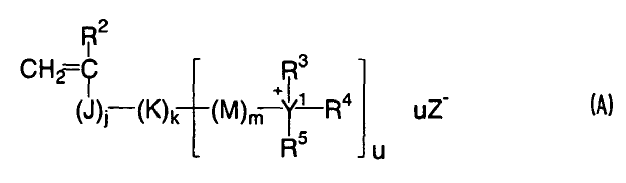

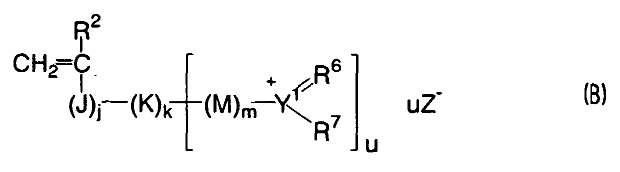

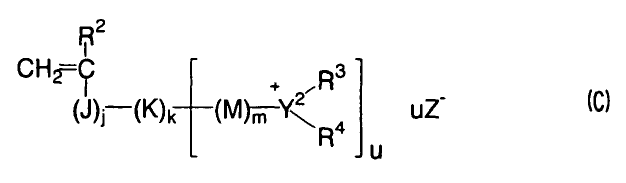

In the formulae (A) to (C), J represents a divalent connecting group. K represents an aromatic group or a substituted aromatic group. M represents a divalent connecting group. Y¹ represents an atom of the V group in a periodic table. Y² represents an atom of the VI group in a periodic table. Z⁻ represents a counter anion. R² represents a hydrogen atom, an alkyl group or a halogen atom; R³, R⁴, R⁵ and R⁷ each independently represent a hydrogen atom, an alkyl group, an aromatic group or an aralkyl group, which may further have a substituent. R⁶ represents an alkylidine group or a substituted alkylidine group. R³ and R⁴, and R⁶ and R⁷ may be bonded together to form a ring. j, k and m each independently represent 0 or 1. u represents an integer from 1 to 3.

More preferable examples among monomers having an onium group and represented by the formulae (A) and (C) are following cases.

J represents -COO- or -CONH- and K represents a phenylene group or a substituted phenylene group. As the substituent to be introduced in the case where K is a substituted phenylene group, a hydroxyl group, halogen atom or alkyl group is preferable.

M represents an alkylene group or a divalent connecting group represented by the molecular formula CₙH₂ₙO, CₙH₂ₙS or CₙH₂ₙ₊₁N wherein n represents an integer from 1 to 12.

Y¹ represents a nitrogen atom or a phosphorous atom and Y² represents a sulfur atom.

Z⁻ represents a halogen ion, PF₆⁻, BF₄⁻ or R⁸SO₃⁻.

R² represents a hydrogen atom or an alkyl group.

R³, R⁴, R⁵ and R⁷ each independently represent a hydrogen atom or an alkyl group having 1 to 10 carbon atoms, an aromatic group having 6 to 10 carbon atoms or an aralkyl group having 7 to 10 carbon atoms, which groups may be bonded with a substituent.

R⁶ is preferably an alkylidine group or substituted alkylidine group having 1 to 10 carbon atoms. R³ and R⁴, and R⁶ and R⁷ may be respectively combined to form a ring.

j, k and m respectively denote 0 or 1 wherein it is undesirable that j and k be 0 simultaneously.

R⁸ represents an alkyl group having 1 to 10 carbon atoms, an aromatic group having 6 to 10 carbon atoms or an aralkyl group having 7 to 10 carbon atoms, which groups may be bonded with a substituent.

More preferable examples among monomers having an onium group and represented by the formulae (A) and (C) are following cases.

K represents a phenylene group or a substituted phenylene group. When K is a substituted phenylene group, the substituent represents a hydrogen atom or an alkyl group having 1 to 3 carbon atoms.

M represents an alkylene group having 1 to 2 carbon atoms or an alkylene group having 1 to 2 carbon atoms and connected by an oxygen atom.

Z- represents a chlorine ion or R⁸SO₃⁻. R² represents a hydrogen atom or a methyl group. j is 0 and k is 1. R⁸ represents an alkyl group having 1 to 3 carbon atoms.

Specific examples of the monomer having an onium group which monomer is preferably used for the specific polymer will be given below. However, these examples are not intended to limit the invention.

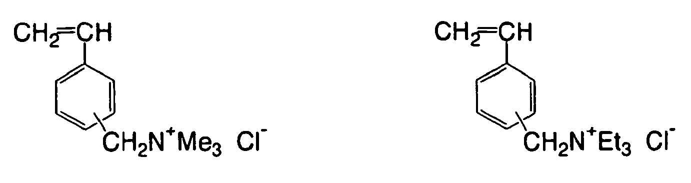

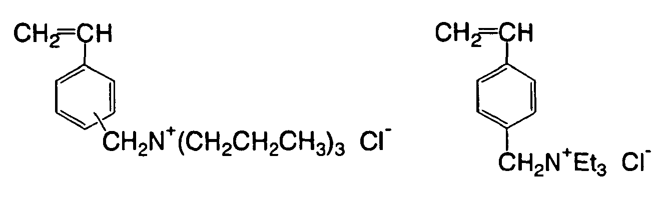

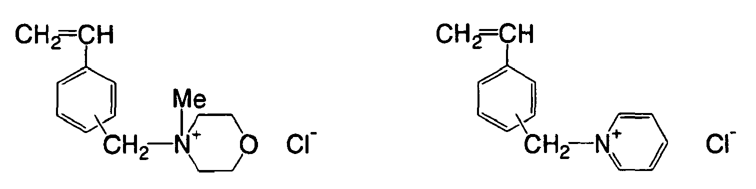

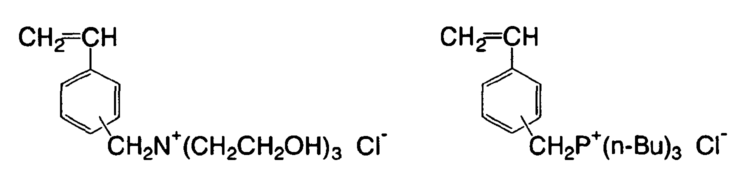

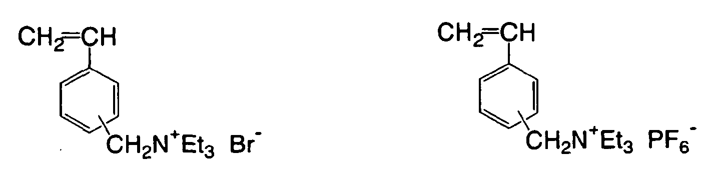

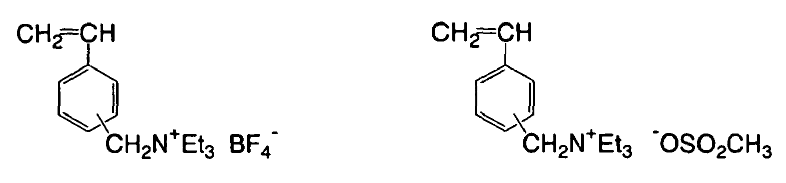

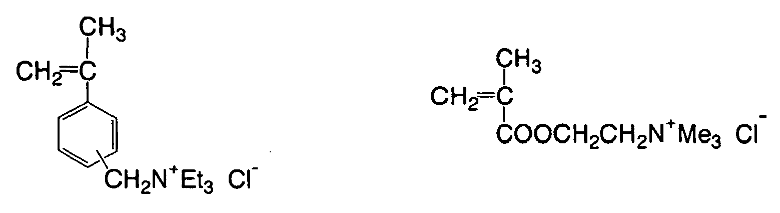

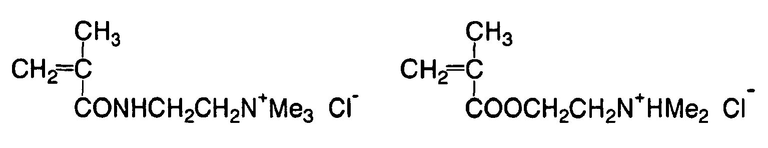

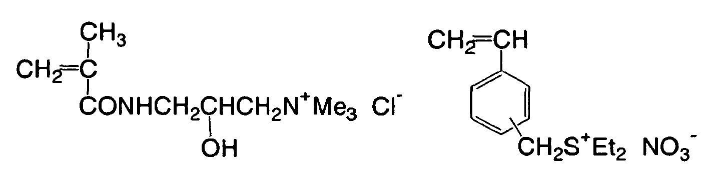

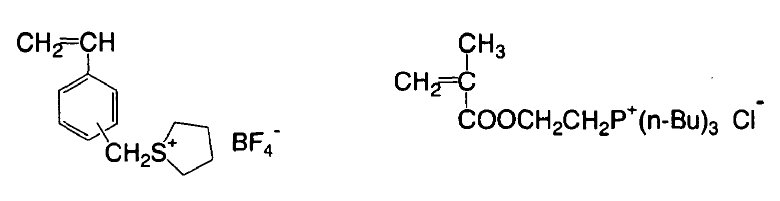

### <Monomer having an acidic group>

A monomer having an acidic group which monomer is preferably used for the specific polymer will be explained.

As the acidic group contained in the monomer having an acidic group, a carboxylic acid group, sulfonic acid group or phosphonic acid group is particularly preferable: however the acidic group is not limited to these groups.

### -Monomer having a carboxylic acid group-

Any monomer can be used as the monomer having a carboxylic acid group without any particular limitation as far as it is a polymerizable compound having a carboxylic acid group and a polymerizable double bond in its structure.

Preferable examples of the monomer having a carboxylic acid group include compounds represented by the following formula (1).

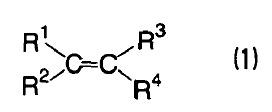

In the formula (1), R¹ to R⁴ each independently represent a hydrogen atom, an alkyl group or an organic group represented by the following formula (2), wherein at least one of R¹ to R⁴ is an organic group represented by the following formula (2).

Here, R¹ to R⁴ preferably contain one or two organic groups and more preferably one organic group represented by the following formula (2) from the viewpoint of copolymerizing ability and availability of raw material when producing the specific polymer. Among R¹ to R⁴, except for those which are the organic groups represented by the following formula (2), are preferably alkyl groups or hydrogen atoms and particularly preferably hydrogen atoms from the viewpoint of the flexibility of the specific polymer obtained as a result of the polymerization.

When R¹ to R⁴ are respectively an alkyl group, they are respectively preferably an alkyl group having 1 to 4 carbon atoms and more preferably a methyl group from the same reason as described above.

-X-COOH (2)

In the formula (2), X represents a single bond, an alkylene group, an arylene group which may have a substituent or any one of the groups represented by the following structural formulae (i) to (iii). A single bond, an arylene group typified by a phenylene group or a group represented by the following structural formula (i) is preferable, an arylene group or a group represented by the following structural formula (i) is more preferable, and a group represented by the following structural formula (i) is particularly preferable from the viewpoint of copolymerizing ability and availability.

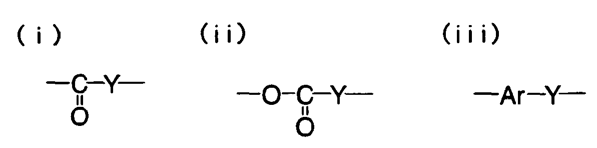

In structural the formulae (i) to (iii), Y represents a divalent connecting group; Ar represents an arylene group which may have a substituent. An alkylene group having 1 to 16 carbon atoms or a single bond is preferable as Y. Methylene (-CH₂-) in the alkylene group may be substituted with ether bond (-O-), thioether bond (-S-), ester bond (-COO-) or amide bond (-CONR-; R represents a hydrogen atom or an alkyl group.). As a bond with which the methylene group is substituted, an ether bond or an ester bond is particularly preferable.

Among these divalent connecting groups, particularly preferably specific examples will be given below.

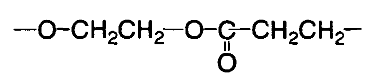

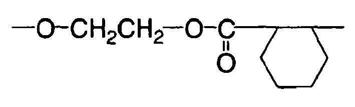

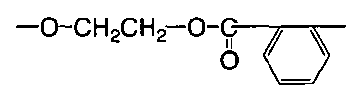

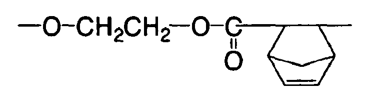

Particularly preferable examples as the monomer having a carboxylic acid group and represented by the formula (1) will be shown below. However, these examples are not intended to limit the invention.

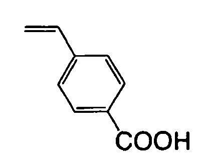

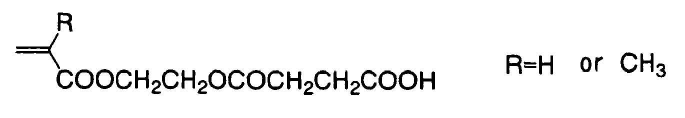

### -Monomers having a sulfonic acid group-

Any compound can be used as the monomer having a sulfonic acid group without any particular limitation as far as it is a polymerizable compound having a sulfonic acid group and a polymerizable double bond in its structure.

Specific and preferable examples of the monomer having a sulfonic acid group include 3-sulfopropylacrylate, 3-sulfopropylmethacrylate and 4-styrenesulfonic acid.

### -Monomers having a phosphonic acid group-

Any compound may be used as the monomer having a phosphonic acid group without any particular limitation as far as it is a polymerizable compound having a phosphonic acid group and a polymerizable double bond in its structure.

Specific and preferable examples of the monomer having a phosphonic acid group include acid phosphoxyethylmethacrylate, 3-chloro-2-acid phosphoxypropylmethacrylate and acid phosphoxypolyoxyethylene glycol monomethacrylate.

### <Other monomers>

Specific examples of other monomers will be given below. However, these examples are not intended to limit the invention.
(1) Acrylamides, methacrylamides, acrylates, methacrylates and hydroxystyrenes having an aromatic hydroxy group such as N-(4-hydroxyphenyl)acrylamide or N-(4-hydroxyphenyl)methacrylamide, o-, m- or p-hydroxystyrene, o- or m-bromo-p-hydroxystyrene, o- or m-chloro-p-hydroxystyrene and o-, m- or p-hydroxyphenylacrylate or methacrylate.
(2) Unsaturated sulfonamides include acrylamides such as N-(o-aminosulfonylphenyl)acrylamide, N-(m-aminosulfonylphenyl)acrylamide, N-(p-aminosulfonylphenyl)acrylamide, N-[1-(3-aminosulfonyl)naphthyl]acrylamide and N-(2-aminosulfonylethyl)acrylamide; methacrylamides such as N-(o-aminosulfonylphenyl)methacrylamide, N-(m-aminosulfonylphenyl)methacrylamide, N-(p-aminosulfonylphenyl)methacrylamide, N-[1-(3-aminosulfonyl)naphthyl]methacrylamide and N-(2-aminosulfonylethyl)methacrylamide; acrylates such as o-aminosulfonylphenylacrylate, m-aminosulfonylphenylacrylate, p-aminosulfonylphenylacrylate and 1-(3-aminosulfonylphenylnaphthyl)acrylate; and methacrylates such as o-aminosulfonylphenylmethacrylate, m-aminosulfonylphenylmethacrylate, p-aminosulfonylphenylmethacrylate and 1-(3-aminosulfonylphenylnaphthyl)methacrylate.
(3) Phenylsulfonylacrylamide which may have a substituent such as tosylacrylamide, and phenylsulfonylmethacrylamide which may have a substituent such as tosylmethacrylamide.
(4) Acrylates and methacrylates having an aliphatic hydroxyl group, for example, 2-hydroxyethylacrylate or 2-hydroxyethylmethacrylate.
(5) Substituted or non-substituted acrylates such as methylacrylate, ethylacrylate, propylacrylate, butylacrylate, amylacrylate, hexylacrylate, cyclohexylacrylate, octylacrylate, phenylacrylate, benzylacrylate, 2-chloroethylacrylate, 4-hydroxybutylacrylate, glycidylacrylate and N-dimethylaminoethylacrylate.
(6) Substituted or non-substituted methacrylates such as methylmethacrylate, ethylmethacrylate, propylmethacrylate, butylmethacrylate, amylmethacrylate, hexylmethacrylate, cyclohexylmethacrylate, octylmethacrylate, phenylmethacrylate, benzylmethacrylate, 2-chloroethylmethacrylate, 4-hydroxybutylmethacrylate, glycidylmethacrylate and N-dimethylaminoethylmethacrylate.
(7) Acrylamides or methacrylamides such as acrylamide, methacrylamide, N-methylolacrylamide, N-methylolmethacrylamide, N-ethylacrylamide, N-ethylmethacrylamide, N-hexylacrylamide, N-hexylmethacrylamide, N-cyclohexylacrylamide, N-cyclohexylmethacrylamide, N-hydroxyethylacrylamide, N-hydroxyethylmethacrylamide, N-phenylacrylamide, N-phenylmethacrylamide, N-benzylacrylamide, N-benzylmethacrylamide, N-nitrophenylacrylamide, N-nitrophenylmethacrylamide, N-ethyl-N-phenylacrylamide and N-ethyl-N-phenylmethacrylamide.
(8) Vinyl ethers such as ethyl vinyl ether, 2-chloroethyl vinyl ether, hydroxyethyl vinyl ether, propyl vinyl ether, butyl vinyl ether, octyl vinyl ether and phenyl vinyl ether.
(9) Vinyl esters such as vinyl acetate, vinyl chloroacetate, vinyl butylate and vinyl benzoate.
(10) styrenes such as styrene, α-methylstyrene, methylstyrene and chloromethylstyrene.
(11) Vinyl ketones such as methyl vinyl ketone, ethyl vinyl ketone, propyl vinyl ketone and phenyl vinyl ketone.
(12) Olefins such as ethylene, propylene, isobutylene, butadiene and isoprene.
(13) N-vinylpyrrolidone, N-vinylcarbazole, 4-vinylpyridine, acrylonitrile, methacrylonitrile and the like.
(14) Lactone group-containing monomers such as pantoyllactone(meth)acrylate, α-(meth)acryloyl-γ-butyrolactone and β-(meth)acryloyl-γ-butyrolactone.
(15) Ethylene oxide group-containing monomers such as polyethylene glycol mono(meth)acrylate, polypropylene glycol mono(meth)acrylate and methoxypolyethylene glycol mono(meth)acrylate.

A content of the aforementioned other monomers in the specific polymer is preferably 95% by mole or less and more preferably 80% by mole or less.

Among the aforementioned other monomers, (4)acrylates and methacrylates having an aliphatic hydroxyl group, (5) acrylates or (6) methacrylates are more preferably copolymerized.

Specific examples (P-1 to P-21) of the specific polymer according to the invention will be explained hereinbelow. However, these examples are not intended to limit the invention.

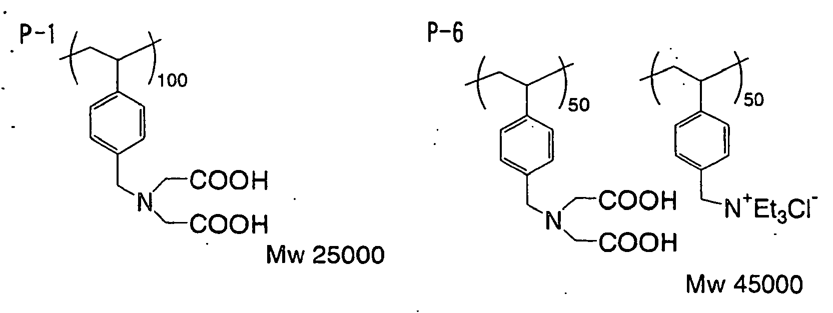

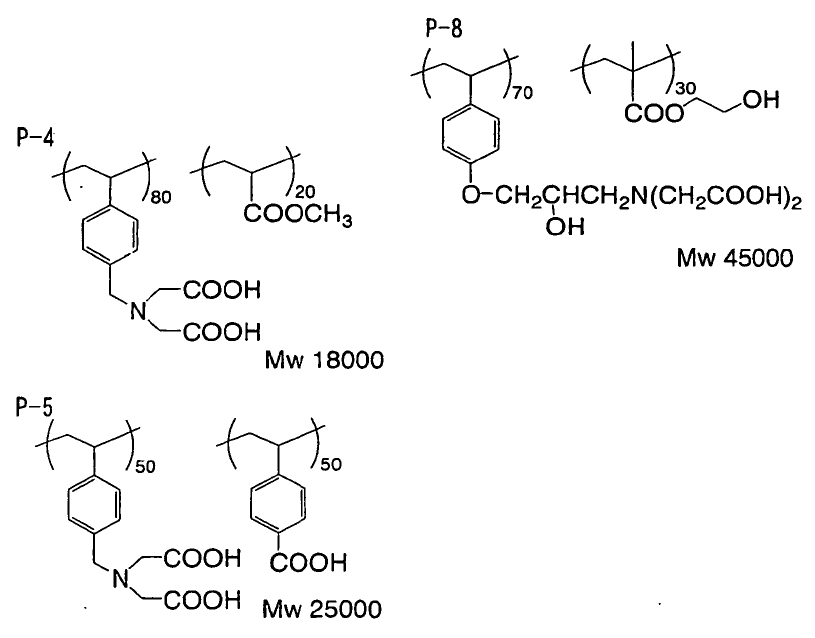

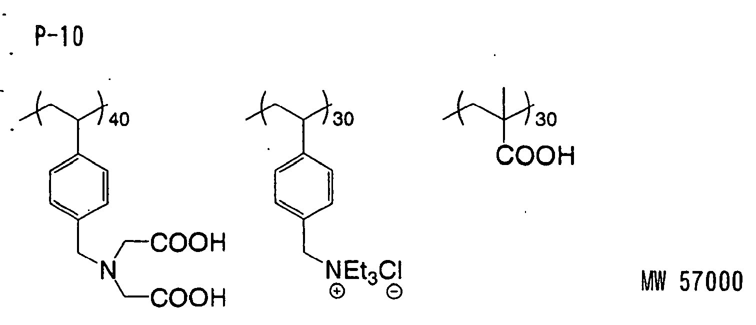

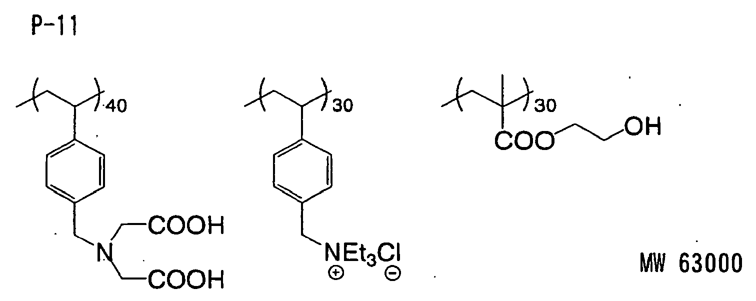

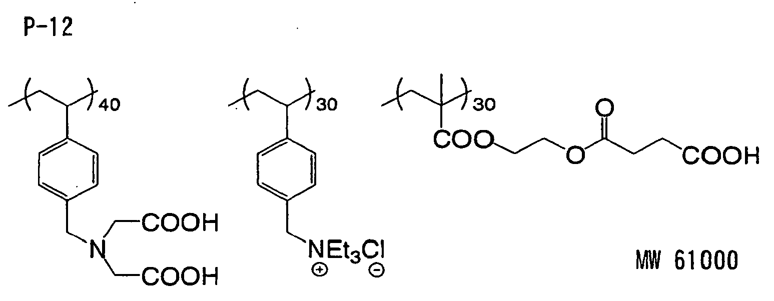

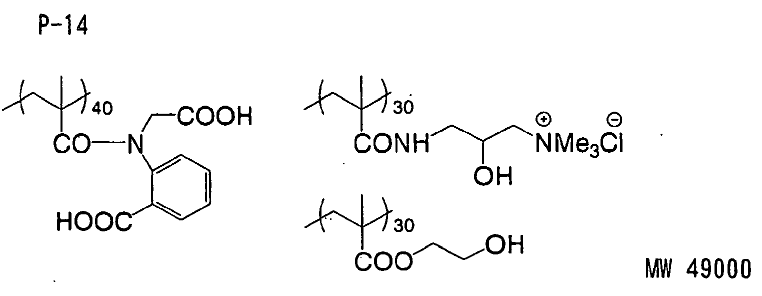

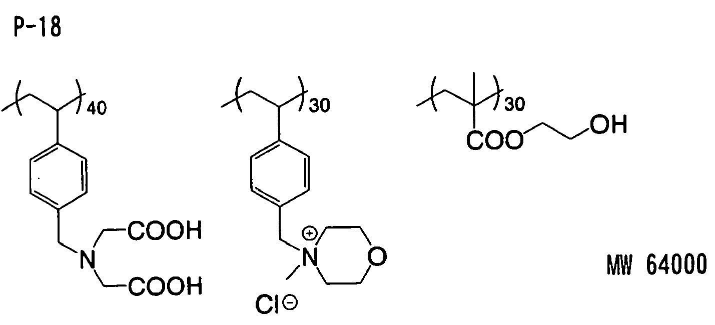

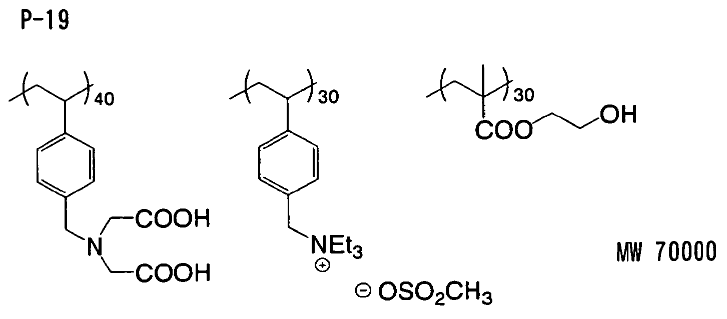

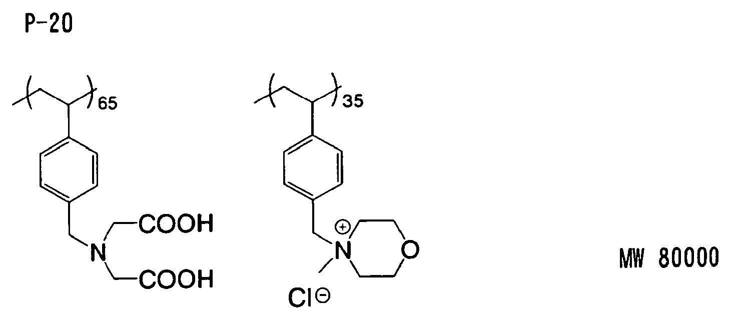

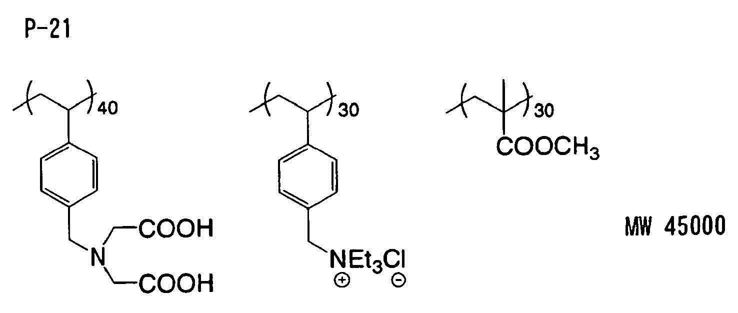

A content of the specific polymer in the intermediate layer is preferably 50 to 100% by mass, and more preferably 80 to 100% by mass based on a total solid content constituting the intermediate layer.

### (Formation of the intermediate layer)

The intermediate layer according to the invention may be disposed by applying a coating solution (intermediate layer-forming coating solution) in which each component for the intermediate layer is dissolved on the support which will be described later by using various methods. Although no particular limitation is imposed on a method of applying the coating solution for intermediate layer, typical examples of the coating method include the following methods.

Specifically, examples of the coating method include (1) a coating method in which a solution prepared by dissolving the specific polymer according to the invention in an organic solvent such as methanol, ethanol or methyl ethyl ketone, a mixture of these solvents or a mixed solvent comprising these organic solvents and water is applied to the support, followed by drying to form the layer, and (2) a coating method in which the support is dipped in a solution prepared by dissolving the specific polymer according to the invention in an organic solvent such as methanol, ethanol or methyl ethyl ketone, a mixture of these solvents or a mixed solvent comprising these organic solvents and water, followed by washing with water or air and drying to form the intermediate layer.

In the above coating method (1), a solution in which the concentration of the total amount of the above compounds is 0.005 to 10% by mass may be applied using various methods. As coating means, any means such as a bar coater coating, rotary coating, spray coating or curtain coating may be used. Also, in the coating method (2), the concentration of the solution is 0.005 to 20% by mass and preferably 0.01 to 10% by mass, dipping temperature is 0 to 70°C and preferably 5 to 60°C and dipping time is 0.1 to 5 minutes and preferably 0.5 to 120 seconds.

The pH of the above intermediate layer-forming coating solution is adjusted using basic materials such as ammonia, triethylamine and potassium hydroxide, inorganic acids such as hydrochloric acid, phosphoric acid, sulfuric acid and nitric acid and various organic acid materials such as organic sulfonic acids, e.g., nitrobenzenesulfonic acid and naphthalenesulfonic acid, organic phosphonic acids, e.g., phenylphosphonic acid and organic carboxylic acids, e.g., benzoic acid, coumarinic acid and malic acid and organic chlorides such as naphthalenesulfonyl chloride and benzenesulfonyl chloride. The coating solution may be used in the pH range of 0 to 12 and preferably 0 to 6.

Also, a material absorbing ultraviolet light, visible light and infrared light may be added to the intermediate layer-forming coating solution to improve the tone reproducibility of a planographic printing plate.

A coating amount of the intermediate layer after drying in the invention is appropriately 1 to 100 mg/m² and preferably 2 to 70 mg/m² in total.

### (Recording layer)

The infrared laser photosensitive positive recording layer (hereinafter, referred to as "recording layer" if necessary) according to the invention will be explained. The recording layer is preferably constituted by compounding (A) an alkali-soluble resin, (B) an infrared absorbing agent, and according to the need, (C) other components. Each component contained in the recording layer will be hereinafter explained one after another.

### ((A) Alkali-soluble resin)

The recording layer according to the invention preferably contains an alkali-soluble resin. The alkali-soluble resin includes homopolymers having an acidic group at its main chain and/or side chain in the polymer, copolymers of these polymers or mixtures of these polymers and copolymers.

Among these polymers and copolymers, those having the acidic groups represented by the following (1) to (6) at its principal chain and/or side chain are preferable from the viewpoint of solubility in an alkaline developing solution and development of dissolution inhibitive ability.
(1) Phenolic hydroxyl groups (-Ar-OH)
(2) Sulfonamide groups (-SO₂NH-R)
(3) Substituted sulfonamide acidic groups (hereinafter referred to as "active imide group") (-SO₂NHCOR, -SO₂NHSO₂R and -CONHSO₂R)
(4) Carboxylic acid groups (-CO₂H)
(5) Sulfonic acid groups (-SO₃H)
(6) Phosphoric acid groups (-OPO₃H₂)

In the above (1) to (6), Ar represents a divalent aryl connecting group which may have a substituent and R represents a hydrogen atom or a hydrocarbon group which may have a substituent.

Among alkali-soluble resins having an acidic group selected from the above (1) to (6), alkali-soluble resins having (1) a phenolic hydroxyl group, (2) a sulfonamide group or (3) an active imide group are preferable, and particularly alkali-soluble resins having (1) a phenolic hydroxyl group or (2) a sulfonamide group are most preferable from the viewpoint of sufficiently securing solubility in an alkaline developing solution, a developing latitude and layer strength.

As the alkali-soluble resin having an acidic group selected from the above (1) to (6), the following resins may be exemplified.
(1) Examples of the alkali-soluble resin having a phenolic hydroxyl group may include novolac resins such as a condensation polymer of phenol and formaldehyde, condensation polymer of m-cresol and formaldehyde, condensation polymer of p-cresol and formaldehyde, condensation polymer of m-/p-mixed cresol and formaldehyde and condensation polymer of phenol, cresol (may be any of m-, p- or m-/p-mixture) and formaldehyde and condensation polymer of pyrogallol and acetone. Also, a copolymer obtained by copolymerizing a compound having a phenolic hydroxyl group at its side chain may be given as examples. Further, a copolymer obtained by copolymerizing a compound having a phenolic hydroxyl group at its side chain may also be used.
   Examples of the compound having a phenolic hydroxyl group may include an acrylamide, methacrylamide, acrylate, methacrylate having a phenolic hydroxyl group or hydroxystyrene.
(2) Examples of the alkali-soluble resin having a sulfonamide group may include polymers constituted of a minimum structure unit derived from a compound having a sulfonamide group as its principal structure component. Examples of the compound as aforementioned include compounds having one or more sulfonamide groups in which at least one hydrogen atom is bonded with a nitrogen atom and one or more polymerizable unsaturated groups in a molecule. Among these compounds, low-molecular compounds having an acryloyl group, allyl group or vinyloxy group and a mono-substituted aminosulfonyl group or substituted sulfonylimino group in a molecule are preferable. Examples of these compounds include compounds represented by the following formulae (i) to (v). 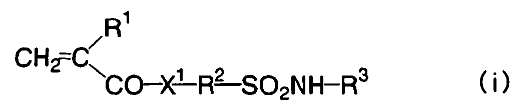 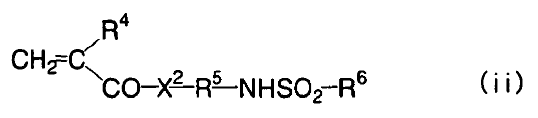 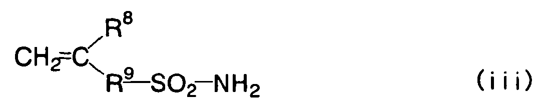 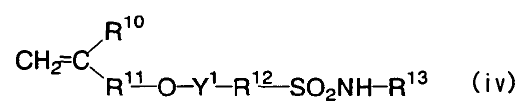 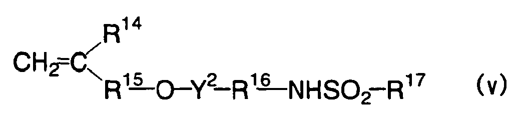
   In the formulae (i) to (v), X¹ and X² each independently represent -O- or - NR⁷-. R¹ and R⁴ each independently represent a hydrogen atom or -CH₃. R², R⁵, R⁹, R¹² and R¹⁶ each independently represent an alkylene group having 1 to 12 carbon atoms, a cycloalkylene group, an arylene group or an aralkylene group which may have a substituent. R³, R⁷ and R¹³ each independently represent a hydrogen atom or an alkyl group having 1 to 12 carbon atoms, a cycloalkyl group, an aryl group or an aralkyl group which may have a substituent. R⁶ and R¹⁷ each independently represent an alkyl group having 1 to 12 carbon atoms, a cycloalkyl group, an aryl group or an aralkyl group which may have a substituent. R⁸, R¹⁰ and R¹⁴ each independently represent a hydrogen atom or -CH₃. R¹¹ and R¹⁵ each independently represent a single bond or an alkylene group having 1 to 12 carbon atoms, a cycloalkylene group, an arylene group or an aralkylene group which may have a substituent. Y¹ and Y² each independently represent a single bond or CO.
   Among the compounds represented by the formulae (i) to (v), particularly m-aminosulfonylphenylmethacrylate, N-(p-aminosulfonylphenyl)methacrylamide, N-(p-aminosulfonylphenyl)acrylamide or the like are preferably used in the planographic printing plate precursor of the invention.
(3) Examples of the alkali-soluble resin having an active imide group include polymers constituted of a minimum structure unit derived from the compound having an active imide group as its principal structure component. Examples of such a compound may include compounds having one or more active imide groups represented by the following structural formula and one or more polymerizable unsaturated group in a molecule. 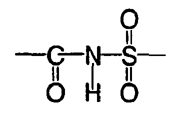
   Specifically, N-(p-toluenesulfonyl)methacrylamide, N-(p-toluenesulfonyl)acrylamide or the like is preferably used.
(4) Examples of the alkali-soluble resin having a carboxylic acid group may include polymers constituted of a minimum structure unit derived from a compound having one or more carboxylic acid groups and one or more polymerizable unsaturated groups as its principal structure component in a molecule.
(5) Examples of the alkali-soluble resin having a sulfonic acid group may include polymers constituted of a minimum structure unit derived from a compound having one or more sulfonic acid groups and one or more polymerizable unsaturated groups as its principal structure component in a molecule.
(6) Examples of the alkali-soluble resin having a phosphoric acid group may include polymers constituted of a minimum structure unit derived from a compound having one or more phosphoric acid groups and one or more polymerizable unsaturated groups as its principal structure component in a molecule.

The minimum structure unit constituting the alkali-soluble resin used for the recording layer and having an acidic group selected from the above (1) to (6) is not particularly limited to only one type, but a copolymer obtained by polymerizing two or more minimum structure units having the same acidic group or two or more minimum structure units having different acidic groups may be used.

As the above copolymer, those containing the compound which is to be polymerized and has an acidic group selected from the above (1) to (6) in an amount of 10% by mole or more are preferable and those containing the compound in an amount of 20% by mole or more are more preferable. If the amount of the compound is less than 10% by mole, there is such a tendency that a developing latitude can be insufficiently improved.

In the invention, in the case where the compound is copolymerized and an alkali-soluble resin is used as a copolymer, other compounds excluding the above acidic groups (1) to (6) may be used as the compound to be copolymerized. Examples of the other compounds excluding the acidic groups (1) to (6) may include, though not limited to, compounds given in the following (m1) to (m12).
(m1) Acrylates and methacrylates having an aliphatic hydroxyl group such as 2-hydroxyethylacrylate or 2-hydroxyethylmethacrylate.
(m2) Alkylacrylates such as methylacrylate, ethylacrylate, propylacrylate, butylacrylate, amylacrylate, hexylacrylate, octylacrylate, benzylacrylate, 2-chloroethylacrylate and glycidylacrylate.
(m3) Alkylmethacrylates such as methylmethacrylate, ethylmethacrylate, propylmethacrylate, butylmethacrylate, amylmethacrylate, hexylmethacrylate, cyclohexylmethacrylate, benzylmethacrylate, 2-chloroethylmethacrylate and glycidylmethacrylate.
(m4) Acrylamides or methacrylamides such as acrylamide, methacrylamide, N-methylolacrylamide, N-ethylacrylamide, N-hexylmethacrylamide, N-cyclohexylacrylamide, N-hydroxyethylacrylamide, N-phenylacrylamide, N-nitrophenylacrylamide and N-ethyl-N-phenylacrylamide.
(m5) Vinyl ethers such as ethyl vinyl ether, 2-chloroethyl vinyl ether, hydroxyethyl vinyl ether, propyl vinyl ether, butyl vinyl ether, octyl vinyl ether and phenyl vinyl ether;
(m6) Vinyl esters such as vinyl acetate, vinyl chloroacetate, vinyl butyrate and vinyl benzoate.
(m7) Styrenes such as styrene, α-methylstyrene, methylstyrene and chloromethylstyrene.
(m8) Vinyl ketones such as methyl vinyl ketone, ethyl vinyl ketone, propyl vinyl ketone and phenyl vinyl ketone.
(m9) Olefins such as ethylene, propylene, isobutylene, butadiene and isoprene.
(m10) N-vinylpyrrolidone, acrylonitrile and methacrylonitrile and the like.
(m11) Unsaturated imides such as maleimide, N-acryloylacrylamide, N-acetylmethacrylamide, N-propionylmethacrylamide and N-(p-chlorobenzoyl)methacrylamide.
(m12) Unsaturated carboxylic acids such as acrylic acid, methacrylic acid, maleic acid anhydride and itaconic acid.

The alkali-soluble resin preferably has a phenolic hydroxyl group in view of excellent image forming ability in exposure to, for example, infrared laser light. Preferable examples of the alkali-soluble resin include novolac resins such as phenol-formaldehyde resins, m-cresol-formaldehyde resins, p-cresol-formaldehyde resins, m-/p-mixed cresol-formaldehyde resins and phenol/cresol (may be any of m-, p- or m-/p-mixed type) mixture-formaldehyde resins and pyrogallol-acetone resins.

Also, further examples of the alkali-soluble resin having a phenolic hydroxyl group include condensation polymers of a phenol having an alkyl group having 3 to 8 carbon atoms as a substituent and a formaldehyde such as t-butylphenol-formaldehyde resins and octylphenol-formaldehyde resins as described in U.S. Patent No. 4,123,279.

The alkali-soluble resin has a weight average molecular weight of preferably 500 or more, and more preferably 1,000 to 700,000 in view of image forming ability. The number average molecular weight of the alkali-soluble resin is preferably 500 or more and more preferably 750 to 650,000. The degree of dispersion (weight average molecular weight/ number average molecular weight) is preferably 1.1 to 10.

These alkali-soluble resins may be used either singly or in combination of two or more.

In the case of combining two or more alkali-soluble resins, a condensation polymer of a phenol having an alkyl group having 3 to 8 carbon atoms as a substituent and formaldehyde such as a condensation polymer of t-butylphenol and formaldehyde and a condensation polymer of octylphenol and formaldehyde as described in U.S. Patent No. 4,123,279, and an alkali-soluble resin having a phenol structure containing an electron attractive group on an aromatic ring as described in JP-A No. 2000-241972 which was previously proposed by the present inventors may be combined.

As the alkali-soluble resin, high-molecular compounds having a phenolic hydroxyl group are preferable and novolac resins are more preferable because image-forming ability is improved from the reason that strong hydrogen bonding ability is produced in an unexposed part whereas a part of hydrogen bonds are easily broken in an exposed area and there is a large difference in developing ability between the unexposed area and the exposed part compared of a non-silicate developing solution.

A total content of the alkali-soluble resin contained in the recording layer is preferably 30 to 98% by mass and more preferably 40 to 95% by mass based on a total solid content from the viewpoint of durability, sensitivity and image-forming ability.

### ((B) Infrared absorbing agent)

The recording layer of the invention contains an infrared absorbing agent. Any material may be used as the infrared absorbing agent without any particular limitation to the absorption wavelength range as far as it absorbs optical energy radiation to generate heat. Preferable examples of the infrared absorbing agent include infrared absorbing dyes or pigments having an absorption maximum at a wavelength range from 760 nm to 1200 nm from the viewpoint of adaptability to an easily available high output laser.

As the infrared absorbing dye, commercially available dyes and known dyes described in literature, for example, *"Senryo Binran(DYE HANDBOOK)"* (edited by Organic Synthetic Chemistry Association, issued in 1970) may be utilized. Specific examples of the infrared absorbing dye include azo dyes, metal complex azo dyes, pyrazolone azo dyes, naphthoquinone dyes, anthraquinone dyes, phthalocyanine dyes, carbonium dyes, quinoneimine dyes, methine dyes, cyanine dyes, squalillium dyes, pyrylium salts, metal thiolate complexes, oxonol dyes, diimmonium dyes, aminium dyes and croconium dyes.

Preferable examples of the dye may include cyanine dyes described in JP-A Nos. 58-125246, 59-84356, 59-202829 and 60-78787, methine dyes described in JP-A Nos. 58-173696, 58-181690 and 58-194595, naphthoquinone dyes described in JP-A Nos. 58-112793, 58-224793, 59-48187, 59-73996, 60-52940 and 60-63744, squalillium dyes described in JP-A No. 58-112792 and cyanine dyes described in U.K. Patent No. 434,875.

Near-infrared absorbing sensitizers described in U.S. Patent No. 5,156,938 are also preferably used. A substituted arylbenzo(thio)pyrylium salt described in U.S. Patent No. 3,881,924, a trimethinethiapyrylium salt described in JP-A No. 57-142645 (U.S. Patent No. 4,327,169), pyrylium type compounds described in JP-A Nos. 58-181051, 58-220143, 59-41363, 59-84248, 59-84249, 59-146063 and 59-146061, cyanine dyes described in JP-A No. 59-216146, pentamethinethiopyrylium salts and the like described in U.S. Patent No. 4,283,475 and pyrylium compounds disclosed in JP-B Nos. 5-13514 and 5-19702 are also preferably used.

Other preferable examples of the infrared absorbing dye may include near-infrared absorbing dyes described as formulae (I) and (II) in U.S. Patent No. 4,756,993.

Particularly preferable examples of the infrared absorbing dye among these dyes include cyanine dyes, phthalocyanine dyes, oxonol dyes, squalillium dyes, pyrylium dyes, thiopyrylium dyes and nickel thiorate complexes. Moreover, dyes represented by the following formulae (a) to (e) are desirable because these dyes are superior in light to heat conversion efficiency and cyanine dyes represented by the following formula (a) are most preferable because these dyes ensure high interaction with the alkali-soluble resin when used in the recording layer according to the invention and are also superior in stability and economy.

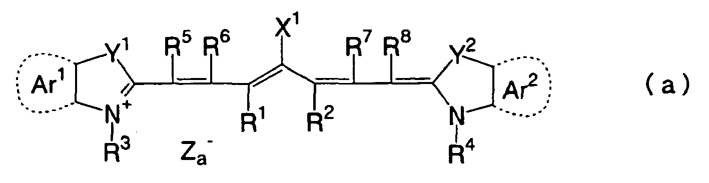

In the formula (a), X¹ represents a hydrogen atom, a halogen atom, -NPh₂, X²-L¹ or a group shown below where X² represents an oxygen atom or a sulfur atom and L¹ represents a hydrocarbon group having 1 to 12 carbon atoms, an aromatic ring having a heteroatom or a hydrocarbon group having 1 to 12 carbon atoms and containing a heteroatom. Here, the heteroatom represents N, S, O, a halogen atom or Se. Xa⁻ is defined as the same as Za⁻ which will be described later and R³ represents a substituent selected from a hydrogen atom, an alkyl group, an aryl group, a substituted or unsubstituted amino group and a halogen atom.

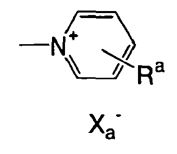

R¹ and R² each independently represent a hydrocarbon group having 1 to 12 carbon atoms. It is preferable that R¹ and R² each independently represent a hydrocarbon group having 2 or more carbon atoms from the viewpoint of the storage stability of the recording layer coating solution. Further, it is particularly preferable that R¹ and R² be bonded with each other to form a five-membered or six-membered ring.

Ar¹ and Ar², which may be the same or different, each represent an aromatic hydrocarbon group which may have a substituent. Preferable examples of the aromatic hydrocarbon group include a benzene ring and naphthalene ring. Preferable examples of the substituent include hydrocarbon groups having 12 or less carbon atoms, halogen atoms and alkoxy groups having 12 or less carbon atoms. Y¹ and Y², which may be the same or different, each represent a sulfur atom or a dialkylmethylene group having 12 or less carbon atoms. R³ and R⁴, which may be the same or different, each represent a hydrocarbon group, which may have a substituent and has 20 or less carbon atoms. Preferable examples of the substituent include alkoxy groups having 12 or less carbon atoms, carboxyl groups and sulfo groups. R⁵, R⁶, R⁷ and R⁸, which may be the same or different, each independently represent a hydrogen atom or a hydrocarbon group having 12 or less carbon atoms. A hydrogen atom is preferable from the viewpoint of the availability of raw material.

Za⁻ represents a counter anion.Za⁻ is unnecessary when the cyanine dye represented by the formula (a) has an anionic substituent in its structure so that charge neutralization is not required. Preferable examples of Za⁻ are a halogen ion, perchloric acid ion, tetrafluoroborate ion, hexafluorophosphate ion, carboxylic acid ion and sulfonic acid ion from the viewpoint of the storage stability of the recording layer coating solution. A halogen ion or an organic acid ion such as a carboxylic acid ion or sulfonic acid ion is preferable and a sulfonic acid ion is more preferable and an arylsulfonic acid ion is particularly preferable from the viewpoint of mutual solubility with an alkali-soluble resin and solubility in the coating solution.

Specific examples of the cyanine dye preferably used in the invention may include, besides those exemplified below, those described in Paragraph Nos. [0017] to [0019] of JP-A No. 2001-133969, Paragraphs No. [0012] to [0038] of JP-A No. 2002-40638 and Paragraph No. [0012] to [0023] of JP-A No. 2002-23360.

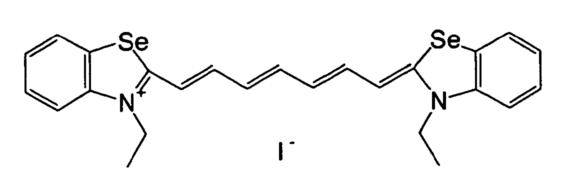

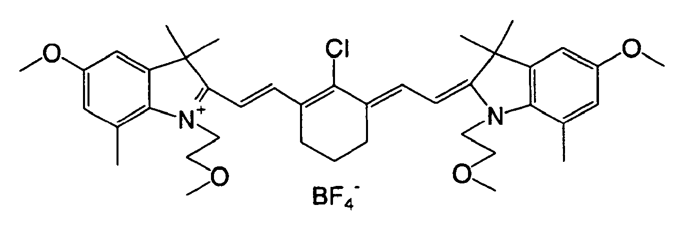

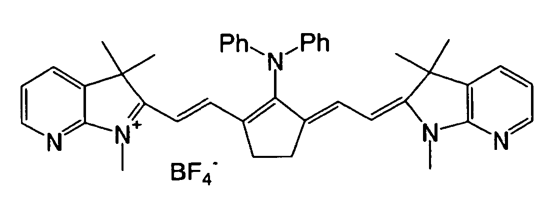

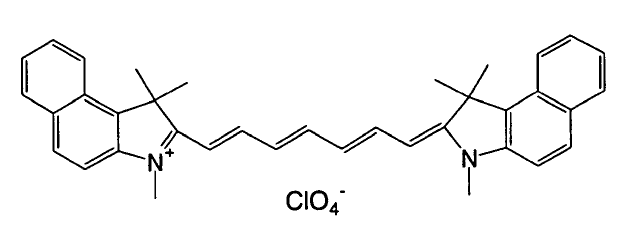

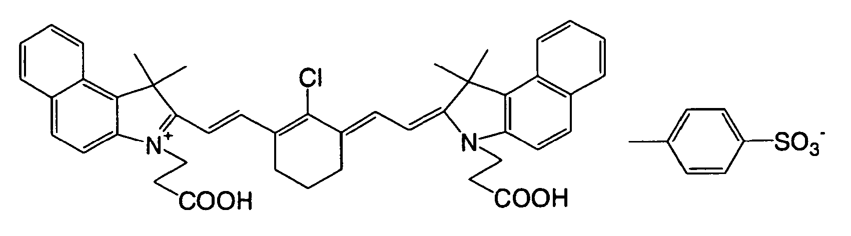

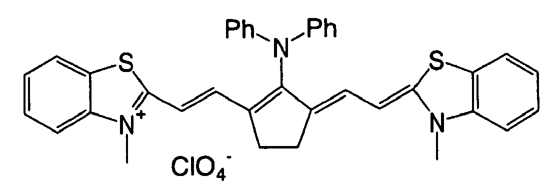

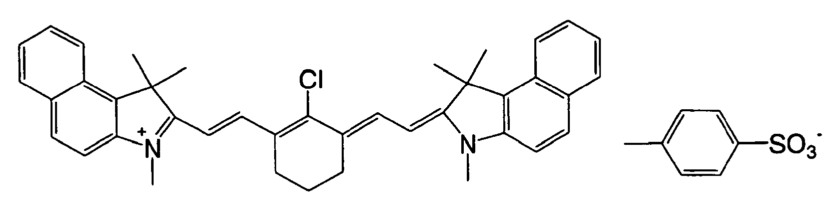

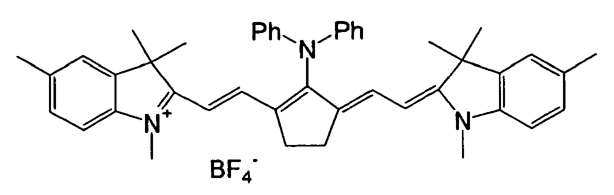

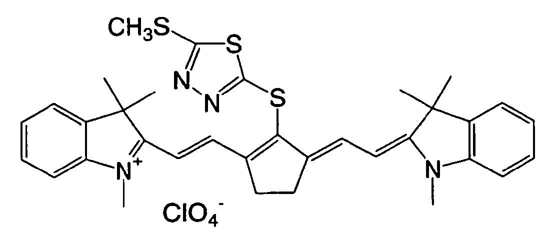

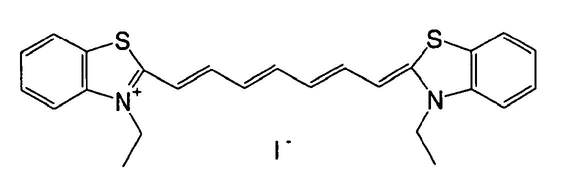

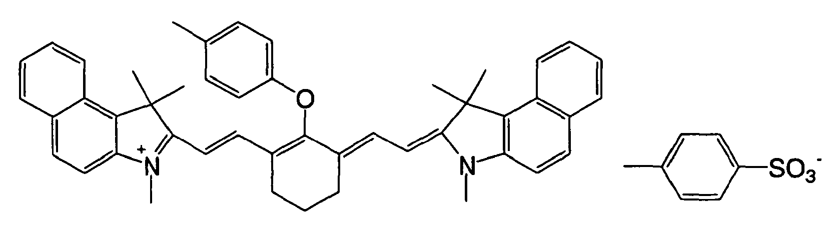

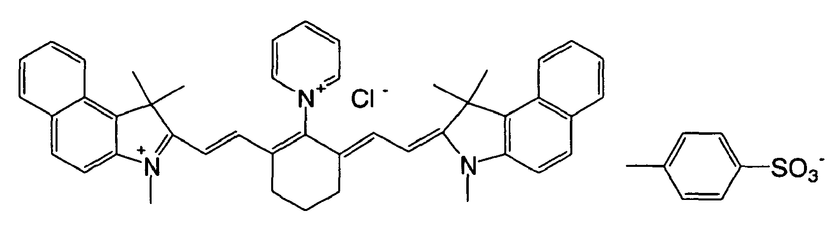

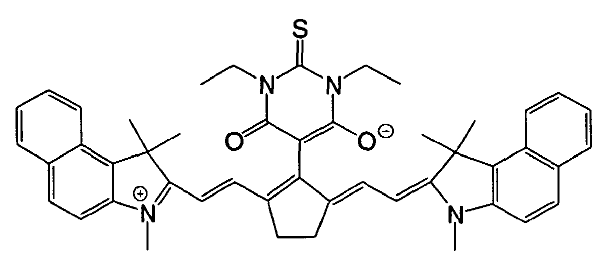

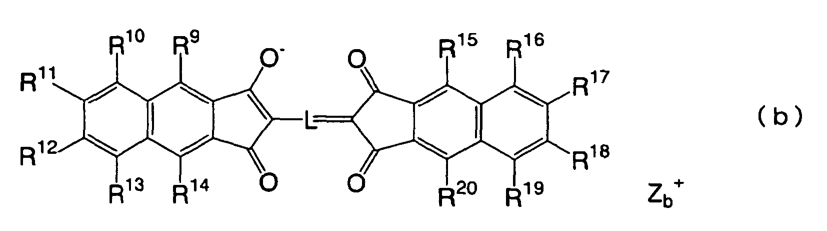

In the formula (b), L represents a methine chain having 7 or more conjugate carbon atoms wherein the methine chain may have substituents, where these substituents may be bonded with each other to form a cyclic structure. Z_{b}⁺ represents a counter cation. Preferable examples of the counter cation include ammonium, iodonium, sulfonium, phosphonium, pyridinium and alkali metal cations (Na⁺, K⁺ and Li⁺). R⁹ to R¹⁴ and R¹⁵ to R²⁰ each independently represent a hydrogen atom, a substituent selected from a halogen atom, a cyano group, an alkyl group, an aryl group, an alkenyl group, an alkinyl group, a carbonyl group, a thio group, a sulfonyl group, a sulfinyl group, an oxy group and an amino group, or a substituent which is a combinations of two or more of these groups, and may be bonded with each other to form a cyclic structure. Here, those represented by the formula (b) wherein L represents a methine chain having 7 conjugate carbon atoms and all of R⁹ to R¹⁴ and R¹⁵ to R²⁰ represent hydrogen atoms are preferable from the viewpoint of availability and effects.

Specific examples of the dye represented by the formula (b) which is preferably used in this invention may include those exemplified below.

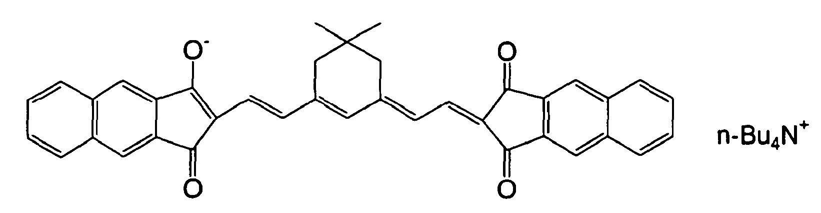

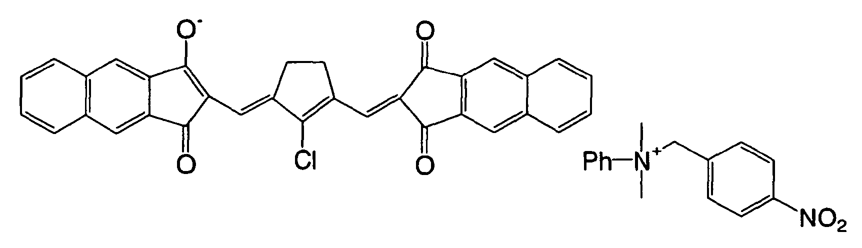

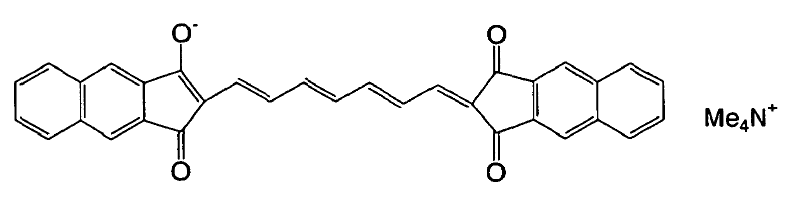

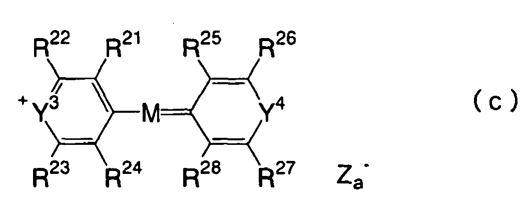

In the formula (c), Y³ and Y⁴ each independently represent an oxygen atom, a sulfur atom, a selen atom or a tellurium atom. M represents a methine chain having 5 or more conjugate carbon atoms. R²¹ to R²⁴ and R²⁵ to R²⁸, which may be the same or different, each represent a hydrogen atom, a halogen atom, a cyano group, an alkyl group, an aryl group, an alkenyl group, an alkinyl group, a carbonyl group, a thio group, a sulfonyl group, a sulfinyl group, an oxy group or an amino group. Zₐ⁻ represents a counter anion and has the same meaning as that in the formula (a).

Specific examples of the dye which may be preferably used and is represented by the formula (c) in the invention include those exemplified below.

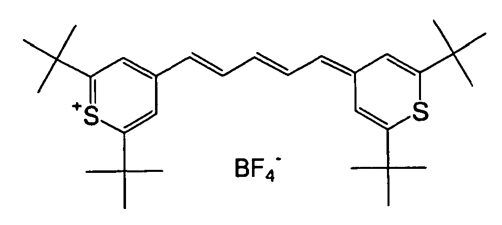

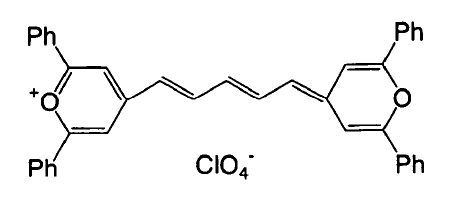

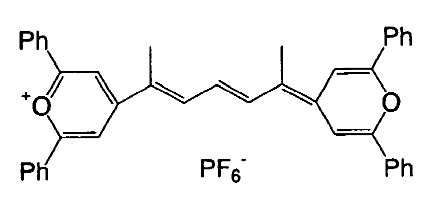

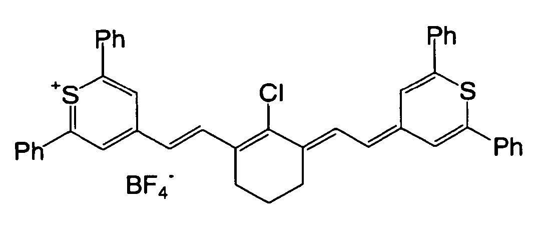

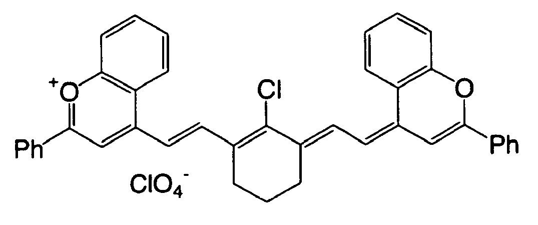

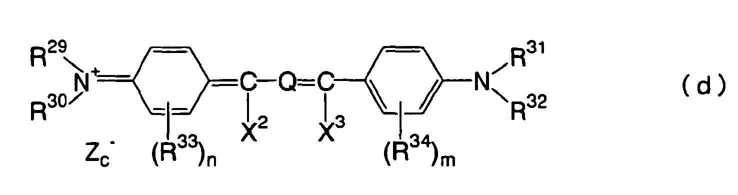

In the formula (d), R²⁹ to R³¹ each independently represent a hydrogen atom, an alkyl group or an aryl group. R³³ and R³⁴ each independently represent an alkyl group, a substituted oxy group or a halogen atom. n and m respectively denote an integer from 0 to 4. R²⁹ and R³⁰ or R³¹ and R³² may be bonded with each other to form a ring and also, R²⁹ and/or R³⁰ and R³³, or R³¹ and/or R³² and R³⁴ may be bonded with each other to form a ring. Moreover, in the case where R³³ or R³⁴ is present in plural, R³³s or R³⁴s may be bonded among them to form a ring. X² and X³ each independently represent a hydrogen atom, an alkyl group or an aryl group. At least one of X² and X³ represents a hydrogen atom or an alkyl group. Q represents a trimethine group or a pentamethine group which may have a substituent and may form a cyclic structure in combination with a divalent organic group. Z_{c}⁻ represents a counter anion and has the same meaning as Zₐ⁻ in the formula (a).

Specific examples of the dye which may be preferably used and is represented by the formula (d) in the invention include those exemplified below.

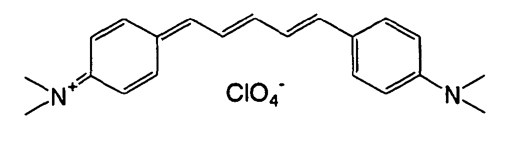

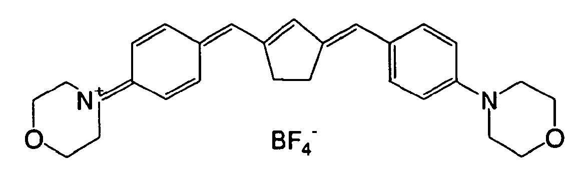

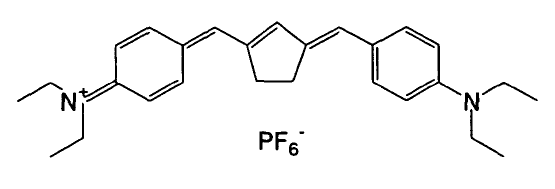

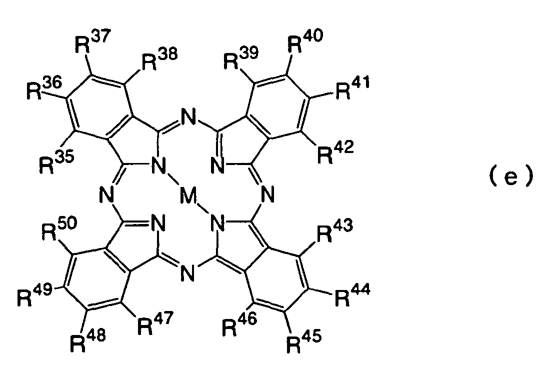

In the formula (e), R³⁵ to R⁵⁰ each independently represent a hydrogen atom, a halogen atom, a cyano group, an alkyl group, an aryl group, an alkenyl group, an alkinyl group, a hydroxyl group, a carbonyl group, a thio group, a sulfonyl group, a sulfinyl group, an oxy group, an amino group or an onium salt structure, wherein these groups or structure may have a substituent when the substituent can be introduced. M represents two hydrogen atoms, a metal atom, a halo metal group or an oxy metal group. As examples of the metal atom contained there, the IA, IIA, IIIB or IVB group atom and transition metals of the first, second or third period in the periodic table and lanthanoid elements are given. Among these materials, copper, magnesium, iron, zinc, cobalt, aluminum, titanium and vanadium are preferable.

Specific examples of the dye which may be preferably used and is represented by the formula (e) in the invention include those exemplified below.

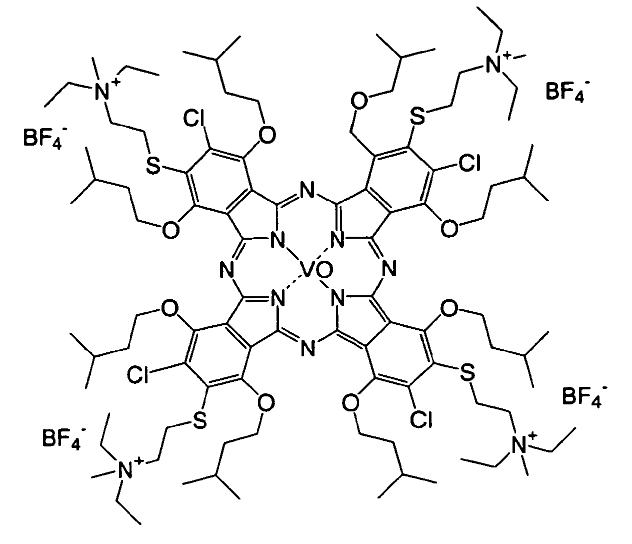

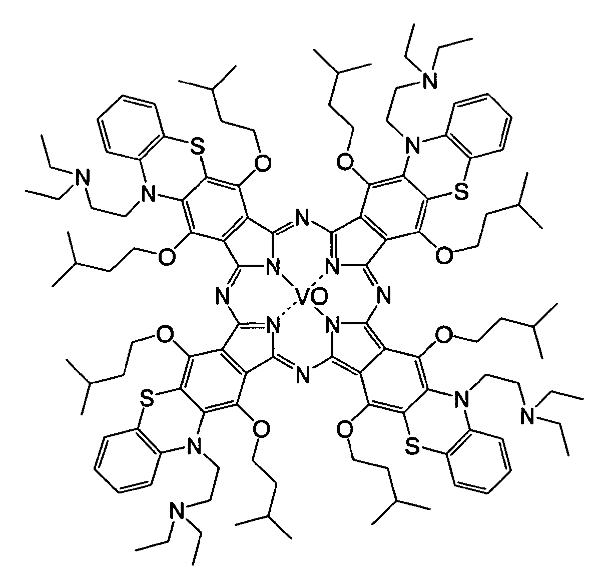

Examples of the pigment used as the infrared absorbing agent according to the invention include commercially available pigments and pigments described in Color Index (C. I.) Handbook, "Saishin Ganryo Binran (Latest Pigment Handbook)" (edited by Japan Pigment Technology Society, published in 1977), *"*Saishin Gannryo Oyo Gjyutu (Latest Pigment Applied Technology)" (CMC Publishing Co., Ltd., published in 1986) and *"*Insatsu Ink Gijyutsu (Printing Ink Technology)" (CMC Publishing Co., Ltd., published in 1984).

Examples of the type of pigment include black pigments, yellow pigments, orange pigments, brown pigments, red pigments, violet pigments, blue pigments, green pigments, fluorescent pigments, metal powder pigments, and others including polymer bound dyes. Specifically, as the pigment, insoluble azo pigments, azo lake pigments, condensed azo pigments, chelate azo pigments, phthalocyanine type pigments, anthraquinone type pigments, perylene or perinone type pigments, thioindigo type pigments, quinacridone type pigments, dioxazine type pigments, isoindolinone type pigments, quinophthalone type pigments, dyeing lake pigments, azine pigments, nitroso pigments, nitro pigments, natural pigments, fluorescent pigments, inorganic pigments, carbon black may be used. Among these pigments, carbon black is preferable.

These pigments may be used either without being surface-treated or with being surface-treated. As the surface treating methods, a method of coating the surface with a resin or wax, a method of sticking a surfactant and a method of binding a reactive substance (e.g., a silane coupling agent, epoxy compound and polyisocyanate) with the surface of a pigment are considered. The aforementioned surface treating methods are described in *"*Kinzoku Sekken no Seishitsu to Oyo (Quality and Application of Metal Soaps)" (Saiwai Shobo), *"*Insatsu Ink Gijyutsu (Printing Ink Technology)" (CMC Publishing Co., Ltd., published in 1984) and *"*Saishin Ganryo Oyo Gijyutsu (Latest Pigment Apply Technology)" (CMC Publishing Co., Ltd., published in 1986).

The particle diameter of the pigment is preferably in a range from 0.01 µm to 10 µm, more preferably in a range from 0.05 µm to 1 µm and particularly preferably in a range from 0.1 µm to 1 µm from the viewpoint of stability and the uniformity of a recording layer when the pigment dispersion is used in a recording layer coating solution for a planographic printing plate precursor. When the particle diameter of the pigment is less than 0.01 µm, this is undesirable from the viewpoint of stability when the pigment dispersion is used in the recording layer coating solution for the planographic printing plate precursor, whereas when the particle diameter exceeds 10 µm, this is undesirable from the viewpoint of the uniformity of the image recording layer.

As a method of dispersing the pigment, known dispersing technologies used for the production of ink and toners may be used. Examples of a dispersing machine include a ultrasonic dispersing machine, sand mill, attritor, pearl mill, super mill, ball mill, impeller, disperser, Kdmill, colloid mill, dynatron, three-roll mill and pressure kneader. The details of these machines are described in *"*Saishin Ganryo Oyo Gijyutsu (Latest Pigment Apply Technology)" (CMC Publishing Co., Ltd., published in 1986).

These pigments and dyes may be added in an amount of 0.01 to 50% by mass and preferably 0.1 to 10% by mass based on a total solid content constituting the recording layer from the viewpoint of sensitivity, uniformity of the recording layer, and printing durability. In the case of a dye, it may be added particularly preferably in an amount of 0.5 to 10% by mass and in the case of a pigment, it may be added particularly preferably in an amount of 0.1 to 10% by mass.

### ((C) Other components)

Various additives may be further added to the recording layer according to the invention, if necessary.
It is preferable to combine a substance (decomposable dissolution inhibitor) such as, particularly, an onium salt, o-quinonediazide compound or alkyl sulfonate, which is heat-decomposable and substantially drops the solubility of the alkali-soluble resin in a non-decomposed state with the intention of improving the dissolution inhibitive ability of an image area in a developing solution. As the decomposable dissolution inhibitor, onium salts such as a diazonium salt, iodonium salt, sulfonium salt and ammonium salt and o-quinonediazide compounds are preferable, onium salts such as a diazonium salt, iodonium salt and sulfonium salt are more preferable and it is particularly preferable to add a diazonium salt as the heat-decomposable dissolution inhibitor.

Preferable examples of the onium salt used in the invention include diazonium salts described in S.I. Schlesinger, Photogr. Sci. Eng., 18, 387 (1974), T.S. Bal et al., Polymer, 21, 423 (1980) and JP-A No. 5-158230, ammonium salts described in U.S. patent Nos. 4,069,055 and 4,069,056 and JP-A No. 3-140140, phosphonium salts described in D.C. Necker et al., Macromolecules, 17, 2468 (1984), C.S. Wen et al., Teh, Proc. Conf. Rad. Curing ASIA, p.478, Tokyo, Oct (1988), and U.S. patent Nos. 4,069,055 and 4,069,056, iodonium salts described in J.V. Crivello et al., Macromorecules, 10(6), 1307 (1977), Chem. &Eng. News, Nov. 28, p.31 (1988), EP No. 104,143 and U.S Patent Nos. 5,041,358 and 4,491,628 and JP-A Nos. 2-150848 and 2-296514, sulfonium salts described in J.V. Crivello et al., Polymer J. 17, 73 (1985), J.V. Crivello at al, J. Org. Chem., 43, 3055 (1978), W.R. Watt et al., J. Polymer Sci., Polymer Chem. Ed., 22, 1789 (1984), J.V. Crivello et al., Polymer Bull., 14, 279 (1985), J.V. Crivello et al., Macromorecules, 14(5), 1141 (1981), J.V. Crivello et al., J.Polymer Sci., Polymer Chem. Ed., 17, 2877 (1979), EP Nos. 370,693, 233,567, 297,443 and 297,442, U.S. Patent Nos. 4,933,377, 3,902,114, 5,041,358, 4,491,628, 4,760,013, 4,734,444 and 2,833,827 and DE Nos. 2,904,626, 3,604,580 and 3,604,581, selenonium salts described in J.V. Crivello et al., Macromorecules, 10(6), 1307 (1977), J.V. Crivello et al., J. Polymer Sci., and Polymer Chem. Ed., 17, 1047 (1979) and arsonium salts described in C.S. Wen et al., Teh, Proc. Conf. Rad. Curing ASIA, p.478, Tokyo, Oct (1988).

Among these onium salts, diazonium salts are particularly preferable from the viewpoint of dissolution inhibitive ability and heat decomposability. Diazonium salts represented by the formula (I) described in JP-A No. 5-158230 and diazonium salts represented by the formula (1) described in JP-A No. 11-143064 are particularly preferable and diazonium salts having a small absorption wavelength in the visible light region and represented by the formula (1) described in JP-A No. 11-143064 are most preferable.

Examples of the counter anion of the onium salt may include tetrafluoroboric acid, hexafluorophosphoric acid, triisopropylnaphthalenesulfonic acid, 5-nitro-o-toluenesulfonic acid, 5-sulfosalicylic acid, 2,5-dimethylbenzenesulfonic acid, 2,4,6-trimethylbenzenesulfonic acid, 2-nitrobenzenesulfonic acid, 3-chlorobenzenesulfonic acid, 3-bromobenzenesulfonic acid, 2-fluorocaprylnaphthalenesulfonic acid, dodecylbenzenesulfonic acid, 1-naphthol-5-sulfonic acid, 2-methoxy-4-hydroxy-5-benzoyl-benzenesulfonic acid and paratoluenesulfonic acid. Among these acids, alkyl aromatic sulfonic acids such as hexafluorophosphoric acid, triisopropylnaphthalenesulfonic acid and 2,5-dimethylbenzenesulfonic acid are particularly preferable.

Preferable examples of the quinonediazides may include o-quinonediazide compounds. The o-quinonediazide compound used in the invention is a compound having at least one o-quinonediazide group and is increased in alkali-solubility by heat decomposition. As the o-quinonediazide compound, compounds having various structures may be used. The o-quinonediazide aids the solubility of a photosensitive type by both effects that the o-quinonediazide loses the ability of inhibiting the dissolution of a binder when it is heat-decomposed and that the o-quinonediazide itself is changed into an alkali-soluble material. As the o-quinonediazide compound to be used in the invention, for example, the compounds described in J. Corser "Light-sensitive Systems" (John Wiley & Sons. Inc.) pp.339-352 may be used. Particularly, sulfonates or sulfonic acid amides of o-quinonediazide obtained by reacting o-quinonediazide with aromatic polyhydroxy compounds or aromatic amino compounds are preferable. An ester of benzoquinone(1,2)-diazidesulfonic acid chloride or naphthoquinone-(1,2)-diazide-5-sulfonic acid chloride and a pyrogallol-acetone resin and an ester of benzoquinone(1,2)-diazidesulfonic acid chloride or naphthoquinone-(1,2)-diazide-5-sulfonic acid chloride and a phenol-formaldehyde resin described in U.S. Patent Nos. 3,046,120 and 3,188,210 are also preferably used.

Further, an ester of naphthoquinone-(1,2)-diazide-4-sulfonic acid chloride and a phenol-formaldehyde resin or a cresol-formaldehyde resin and an ester of naphthoquinone-(1,2)-diazide-4-sulfonic acid chloride and a pyrogallol-acetone resin are also preferably used. Other useful o-quinonediazide compounds are reported in a number of patents and known. Examples of these o-quinonediazide compounds include those described in JP-A Nos. 47-5303, 48-63802, 48-63803, 48-96575, 49-38701 and 48-13354, JP-B Nos. 41-11222, 45-9610 and 49-17481 and U.S. Patent Nos. 2,797,213, 3,454,400, 3,544,323, 3,573,917, 3,674,495 and 3,785,825, U.K. Patent Nos. 1,227,602, 1,251,345, 1,267,005, 1,329,888 and 1,330,932 and DE No. 854,890.

The amount of the onium salt and/or o-quinonediazide compound to be added as the decomposable dissolution inhibitor is in a range preferably from 0.1 to 10% by mass, more preferably from 0.1 to 5% by mass and particularly preferably from 0.2 to 2% by mass based on a total solid content of the recording layer when the photosensitive composition of the invention is used for the recording layer of a planographic printing plate. These compounds may be used as a mixture of several types though they may be used singly.

The amount of additives other than the o-quinonediazide compound to be added is preferably 0 to 5% by mass, more preferably 0 to 2% by mass and particularly preferably 0.1 to 1.5% by mass. The additives and binder used in the invention are preferably contained in the same layer.

Also, a dissolution inhibitor having no decomposability may be used together. Preferable examples of the dissolution inhibitor may include sulfonates, phosphates, aromatic carboxylates, aromatic disulfones, carboxylic acid anhydrides, aromatic ketones, aromatic aldehydes, aromatic amines and aromatic ethers as described in detail in JP-A No. 10-268512, acid color-developable dyes which have a lactone skeleton, N,N-diarylamide skeleton or diarylmethylimino skeleton and double as a coloring agent as described in detail in JP-A No. 11-190903 and nonionic surfactants described in detail in JP-A No. 2000-105454.

Moreover, a polymer obtained from a polymer component consisting of a (meth)acrylate monomer having two or three perfluoroalkyl groups having 3 to 20 carbon atoms in its molecule as described in JP-A No. 2000-187318 may be used together for the purpose of improving the discrimination (discrimination between hydrophobic characteristics/hydrophilic characteristics) of an image and strengthening resistance to surface scratches. The amount of such a compound to be added is preferably 0.1 to 10% by mass and more preferably 0.5 to 5% by mass based on a total solid content of the recording layer when the photosensitive composition of the invention is used for the recording layer of a planographic printing plate.

A compound which decreases the coefficient of static friction of the surface may be added in the invention for the purpose of imparting resistance to scratches. Specific examples of the compound may include esters of long-chain alkyl carboxylic acids as described in U.S. Patent No. 6,117,913. The amount of such a compound to be added is preferably 0.1 to 10% by mass and more preferably 0.5 to 5% by mass based on a total solid content of the recording layer of the planographic printing plate of the invention.

Also, the invention may contain a compound having a low-molecular weight acidic group if necessary. Examples of the acidic group include a sulfonic acid group, carboxylic acid group and phosphoric acid group. Among these groups, a compound having a sulfonic acid group is preferable. Specific examples of such a compound include aromatic sulfonic acids such as p-toluenesulfonic acid and naphthalenesulfonic acid and aliphatic sulfonic acids.

Besides, cyclic acid anhydrides, phenols and organic acids may be used together for the purpose of more improving sensitivity. As the cyclic acid anhydride, phthalic acid anhydride, tetrahydrophthalic acid anhydride, hexahydrophthalic acid anhydride, 3,6-endoxy-Δ4-tetrahydrophthalic acid anhydride, tetrachlorophthalic acid anhydride, maleic acid anhydride, chloromaleic acid anhydride, α-phenylmaleic acid anhydride, succinic acid anhydride and pyromellitic acid anhydride as described in U.S. Patent No. 4,115,128 may be used. Examples of the phenols include bisphenol A, p-nitrophenol, p-ethoxyphenol, 2,4,4'-trihydroxybenzophenone, 2,3,4-trihydroxybenzophenone, 4-hydroxybenzophenone, 4,4',4"-trihydroxytriphenylmethane, 4,4',3",4"-tetrahydroxy-3,5,3',5'-tetramethyltriphenylmethane. Examples of the organic acids include sulfonic acids, sulfinic acids, alkyl sulfates, phosphonic acids, phosphates and carboxylic acids as described in JP-A Nos. 60-88942 and 2-96755. Specific examples of the organic acids include p-toluenesulfonic acid, dodecylbenzenesulfonic acid, p-toluenesulfinic acid, ethylsulfuric acid, phenylphosphonic acid, phenylphosphinic acid, phenyl phosphate, diphenyl phosphate, benzoic acid, isophthalic acid, adipic acid, p-toluic acid, 3,4-dimethoxybenzoic acid, phthalic acid, terephthalic acid, 4-cyclohexene-1,2-dicarboxylic acid, erucic acid, lauric acid, n-undecanoic acid and ascorbic acid. The proportion of the cyclic acid anhydrides, phenols and organic acids in the recording layer when these compounds are added to the recording layer of the planographic printing plate precursor is preferably 0.05 to 20% by mass, more preferably 0.1 to 15% by mass and particularly preferably 0.1 to 10% by mass.

Also, nonionic surfactants as described in JP-A Nos. 62-251740 and 3-208514, amphoteric surfactants as described in JP-A Nos. 59-121044 and 4-13149, siloxane type compounds as described in EP No. 950517 and fluorine-containing monomer as described in JP-A No. 11-288093 copolymers may be added to the recording layer according to the invention to widen process stability to developing conditions.

Specific examples of the nonionic surfactant include sorbitan tristearate, sorbitan monopalmitate, sorbitan triorate, monoglyceride stearate and polyoxyethylene nonylphenyl ether. Specific examples of the amphoteric surfactant include alkyldi(aminoethyl)glycine, alkylpolyaminoethylglycine hydrochloride, 2-alkyl-N-carboxyethyl-N-hydroxyethylimidazoliniumbetaine and N-tetradecyl-N,N-betaine types (e.g., trademark: Amorgen K, manufactured by Dai-ichi Kogyo Seiyaku Co., Ltd.).

As the siloxane type compound, block copolymers of dimethylsiloxane and a polyalkylene oxide are preferable. Specific examples of the siloxane type compound include polyalkylene oxide modified silicones such as DBE-224, DBE-621, DBE-712, DBP-732 and DBP-534 manufactured by Chisso Corporation and Tego Glide 100 manufactured by Tego in Germany.

The proportion of the above nonionic surfactant and amphoteric surfactant in the recording layer is preferably 0.05 to 15% by mass and more preferably 0.1 to 5% by mass.

A printing-out agent for obtaining a visible image immediately after heating by exposure and dyes or pigments as image coloring agents may be added to the recording layer according to the invention.

Typical examples of the printing-out agent include combinations of compounds (photo-acid emitting agent) which emit an acid by heating in exposure and organic dyes capable of forming a salt. Specific examples of these combinations include combinations of o-naphthoquinonediazide-4-sulfonic acid halogenide and salt-forming organic dyes as described in JP-A No. 50-36209 and 53-8128 and combinations of trihalomethyl compounds and salt-forming organic dyes as described in JP-A Nos. 53-36223, 54-74728, 60-3626, 61-143748, 61-151644 and 63-58440. Such a trihalomethyl compound include oxazole type compounds and triazine type compounds, which are both superior in stability with time and provide a clear printing-out image.

As the coloring agent for an image, dyes other than the aforementioned salt-forming organic dyes may be used. As preferable dyes including the salt-forming organic dyes, oil-soluble dyes and basic dyes may be exemplified. Examples of these dyes may include Oil yellow # 101, Oil Yellow # 103, Oil Pink #312, Oil Green BG, Oil Blue BOS, Oil Blue #603, Oil Black BY, Oil Black BS and Oil Black T-505 (manufactured by Orient Chemical Industries, Ltd.), Victoria Pure Blue, Crystal Violet (CI42555), Methyl Violet (CI42535), Ethyl Violet, Rhodamine B (CI145170B), Malachite Green (CI42000) and Methylene Blue (CI52015). The dyes described in JP-A No. 62-293247 are particularly preferable. These dyes may be added in a ratio of 0.01 to 10% by mass and preferably 0.1 to 3% by mass based on a total solid content of the recording layer. A plasticizer is further added to the invention to impart flexibility to a coating film if necessary. As the plasticizer, oligomers or polymers of butylphthalyl, polyethylene glycol, tributyl citrate, diethyl phthalate, dibutyl phthalate, dihexyl phthalate, dioctyl phthalate, tricresyl phosphate, tributyl phosphate, trioctyl phosphate, tetrahydrofurfuryl oleate, acrylic acid or methacrylic acid are used.

Besides the above compounds, epoxy compounds, vinyl ethers, and further, phenol compounds having a hydroxymethyl group and phenol compounds having an alkoxymethyl group as described in JP-A No. 8-276558 and crosslinking compounds having an alkali dissolution inhibitive action as described in JP-A No. 11-160860 provided by the present inventors may be added appropriately according to the need.

### (Formation of the recording layer)

The recording layer according to the invention may be formed by dissolving each component constituting the recording layer and by applying the resulting solution to a proper support.

Examples of the solvent to be used here include, though not limited to, ethylene dichloride, cyclohexanone, methyl ethyl ketone, methanol, ethanol, propanol, ethylene glycol monomethyl ether, 1-methoxy-2-propanol, 2-methoxyethyl acetate, 1-methoxy-2-propyl acetate, dimethoxyethane, methyl lactate, ethyl lactate, N,N-dimethylacetamide, N,N-dimethylformamide, tetramethylurea, N-methylpyrrolidone, dimethylsulfoxide, sulfolane, γ-butyrolactone and toluene. These solvents may be used either singly or by mixing.

The concentration of the above components (whole solid content containing additives) in the solvent is preferably 1 to 50% by mass.

The coating amount (solid content) obtained after the coating solution is applied and dried on the support is generally preferably 0.5 to 5.0 g/m² though depending on use. As the coating amount decreases, apparent sensitivity increases but the film characteristics of a photosensitive layer (recording layer) deteriorates.

Examples of a coating method include bar coater coating, rotary coating, spray coating, curtain coating, dip coating, air-knife coating, blade coating and roll coating though various methods may be used.

A surfactant for bettering coatability, for example, a fluorine type surfactant as described in JP-A No. 62-170950 may be added to the recording layer of the invention. The amount of the surfactant to be added is preferably 0.01 to 1 % by mass and more preferably 0.05 to 0.5% by mass based on a total solid content constituting the recording layer.

### (Structure of the recording layer)

The recording layer according to the invention may have a multilayer structure, for example, a two-layer structure comprising a resin layer made of an alkali-soluble polymer as a lower layer (support side) and the aforementioned recording layer as an upper layer.

This results in that sensitivity to an infrared laser is bettered since the recording layer (upper layer) which is reduced in solubility in an alkali developing solution by exposure is disposed on or in the vicinity of the surface to be exposed to light and the heat generated by exposure to infrared laser light is not diffused to the support so that it is used effectively because this resin layer (lower layer) exists between the support and the recording layer and functions as an insulating layer, and it is therefore possible to accomplish high sensitization.

It is also considered that because in an exposed part, the recording layer (upper layer) which has become non-penetrative to an alkali developing solution functions as a protective layer for the resin layer (lower layer), developing stability is bettered, an image having high discrimination is formed and stability with time is secured. It is also considered that because in an unexposed part, an uncured binder component is dissolved and dispersed rapidly in a developing solution and the resin layer (lower layer) present adjacent to the support is constituted of an alkali-soluble polymer, solubility in the developing solution is bettered, for example, the resin layer is rapidly dissolved without generation of a residual film and the like even if a developing solution reduced in activity is used, bringing about excellent developing ability.

### (Support)

A dimensionally stable plate material is used as the support to be used for the planographic printing plate precursor of the invention. Examples of the support material include paper, paper on which plastics (e.g., a polyethylene, polypropylene and polystyrene) are laminated, metal plates (e.g., aluminum, zinc and copper), plastic films (e.g., cellulose diacetate, cellulose triacetate, cellulose propionate, cellulose butyrate, butyric acid cellulose butyrate, cellulose nitrate, polyethylene terephthalate, polyethylene, polystyrene, polypropylene, polycarbonate and polyvinylacetal) and paper or plastic films on which a metal as aforementioned is laminated or deposited.

As the support material according to the invention, a polyester film or an aluminum plate is preferable. Among these materials, an aluminum plate which is dimensionally stable and relatively inexpensive is particularly preferable. Preferable aluminum plates are a pure aluminum plate and an alloy plate containing aluminum as a major component and a minute amount of different elements. Further, plastic films on which aluminum is laminated or deposited may be used. Examples of these different elements contained in the aluminum alloy include silicon, iron, manganese, copper, magnesium, chromium, zinc, bismuth, nickel and titanium. The content of these different elements in the alloy is 10% by mass at most. Particularly preferable aluminum in the invention is pure aluminum. However, because it is difficult to produce completely pure aluminum from a limitation to refining technologies, aluminum containing different elements a little may be used. The aluminum plate applied to the invention is not specified in its composition and aluminum plates made of conventionally known and commonly used materials may be used appropriately. The thickness of the aluminum plate is about 0.1 mm to 0.6 mm, preferably 0.15 mm to 0.4 mm and particularly preferably 0.2 mm to 0.3 mm.

Before roughing the aluminum plate, degreasing treatment using, for example, a surfactant, organic solvent or an aqueous alkali solution is carried out to remove roll oil from the surface, as desired.

The roughing treatment of the surface of the aluminum plate is carried out using various methods, for example, a method in which the surface is roughened mechanically, a method in which the surface is dissolved and roughened electrochemically and a method in which the surface is selectively dissolved chemically. As the mechanical method, known methods such as a ball abrasive method, brush abrasive method, blast abrasive method and buff abrasive method may be used. Also, the electrochemical surface roughing method include a method using AC or DC in a hydrochloric acid or nitric acid electrolyte. Also, a method which is a combination of the both may be utilized as disclosed in JP-A No. 54-63902.

The aluminum plate which is surface-roughened in this manner may be subjected to anodic oxidation treatment through alkali-etching treatment and neutralizing treatment if necessary to raise the moisture retentivity and abrasion resistance of the surface. As the electrolyte used for the anodic oxidation treatment of the aluminum plate, various electrolytes capable of forming a porous oxide film may be used and sulfuric acid, phosphoric acid, oxalic acid, chromic acid or a mixed acid thereof may be used in general. The concentration of these electrolytes is determined according to the type of electrolyte.

Although the process condition of the anodic oxidation cannot be specified as a whole because it varies depending on the type of electrolyte, the condition is properly in the following ranges in general: concentration of an electrolytic solution: 1 to 80% by mass, solution temperature: 5 to 70°C, current density: 5 to 60 A/dm², voltage: 1 to 100 V and electrolytic time: 10 seconds to 5 minutes.

When the amount of the anodic oxide film is less than 1.0 g/m², unsatisfactory printing durability is obtained and a non-image portion is easily scratched and the so-called "flaw dirt" which is a phenomenon that ink adheres to the flaw portion during printing tends to arise.

Hydrophilic treatment of the surface of the support is carried out as desired after the above anodic oxidation treatment. Examples of the hydrophilic treatment used in the invention include an alkali metal silicate (for example, an aqueous sodium silicate solution) method as described in U.S. Patent Nos. 2,714,066, 3,181,461, 3,280,734 and 3,902,734. In this method, the support is treated by dipping it or electrolytically treated in an aqueous sodium silicate solution. Other than above, for example, a treating method using potassium fluorozirconate as disclosed in JP-B No. 36-22063 and a treating method using a polyvinylphosphonic acid as disclosed in U.S. Patent No. 3,276,868, 4,153,461 and 4,689,272 are used.

As particularly preferable treatment of the support, it is preferable to process an aluminum plate by mechanical surface roughing treatment, alkali etching treatment, desmatting treatment using an acid, electrochemical surface roughing treatment using an electrolyte containing nitric acid and electrochemical surface roughing treatment using an aqueous solution containing a hydrochloric acid one after another. The support treated in this manner has a very large surface area.

Although the reason why the intermediate layer according to the invention develops a more preferable effect when it is disposed on the support treated as above is not clearly understood, it is considered that the intermediate layer according to the invention can cover the surface of a substrate sufficiently due to the effect of interacting with the substrate even for a support having a very large surface area and it is therefore possible to improve the adhesion between the recording layer (photosensitive layer) and the support and also to better the scumming property of a non-image area.

Although the planographic printing plate precursor is made into a. planographic printing plate by various treating methods corresponding to the recording layer, it is preferably made into a planographic printing plate by using a method of developing using a developing solution containing substantially no alkali metal silicate. Specifically, the planographic printing plate precursor of the invention is preferably one which has to be treated by a developing solution containing substantially no alkali metal silicate. This method is described in detail in JP-A No. 11-109637. In the invention, the content described in this publication may be used.

The positive planographic printing plate precursor manufactured in the above manner is usually subjected to image exposure and developing treatment.

As a light source of beams used for image exposure, light sources having an emitting wavelength in the near infrared to infrared region are preferable, and a solid laser and a semiconductor laser are particularly preferable.

As a developing solution and a replenishing solution for the planographic printing plate precursor of the invention, conventionally known aqueous alkali solution may be used.

Examples of the alkali solutions include inorganic alkali salts such as sodium silicate, potassium silicate, trisodium phosphate, tripotassium phosphate, triammonium phosphate, disodium phosphate, dipotassium phosphate, diammonium phosphate, sodium carbonate, potassium carbonate, ammonium carbonate, sodium bicarbonate, potassium bicarbonate, ammonium bicarbonate, sodium borate, potassium borate, ammonium borate, sodium hydroxide, ammonium hydroxide, potassium hydroxide and lithium hydroxide. Also, organic alkali agents such as monomethylamine, dimethylamine, trimethylamine, monoethylamine, diethylamine, triethylamine, monoisopropylamine, diisopropylamine, triisopropylamine, n-butylamine, monoethanolamine, diethanolamine, triethanolamine, monoisopropanolamine, diisopropanolamine, ethyleneimine, ethylenediamine and pyridine are used. These alkali agents are used either singly or in combinations of two or more.

Particularly preferable developing solutions among these alkali agents are aqueous silicate solutions such as aqueous solutions of sodium silicate or potassium silicate. This is because developing characteristics can be controlled by the ratio of silicon oxide SiO₂ which is a component of the silicate to an alkali metal oxide M₂O and by the concentrations of the both. For example, alkali metal silicates as described in JP-A No. 54-62004 and JP-B No. 57-7427 are used effectively.

Moreover, it is known that in the case of developing using an automatic developing machine, the same one as a developing solution or an aqueous solution (replenishing solution) having a higher alkali strength than the developing solution is added to the developing solution, whereby a large number of planographic printing plate precursors can be treated without exchanging the developing solution in the developing tank for a long period of time. In the invention, this make-up system is also preferably applied. Various surfactants and organic solvents may be compounded in the developing solution and the replenishing solution if necessary with the intention of promoting or suppressing developing ability, dispersing developing residues and raising the affinity of the printing plate image area to ink.

Preferable examples of the surfactant include anionic, cationic, nonionic and amphoteric surfactants. Moreover, a reducing agent such as a sodium salt or potassium salt of an inorganic acid such as hydroquinone, resorcin, sulfurous acid and sulfurous acid hydroacid, an organic carboxylic acid, an antifoaming agent and a water softener may be compounded in the developing solution and the replenishing solution if necessary.

The printing plate developed using the developing solution and replenishing solution as aforementioned is subjected to after-treatment performed using rinsing water, a rinsing solution containing surfactants and the like and a protective gum solution containing gum arabic and a starch derivative. For the after-treatment to be applied to the invention, these treatments are used in various combinations.

In plate-making and printing fields in recent years, an automatic developing machine for printing plate materials has been widely used for rationalization and standardization of plate-making works. This automatic developing machine usually constituted by a developing section and an aftertreating section, comprising a unit for carrying a printing plate material, vessels for each processing solution and a spraying unit, wherein each processing solution which is pumped up is sprayed from a spray nozzle while carrying the exposed printing plate horizontally to carry out developing treatment. Also, a method has been known recently in which a printing plate precursor is carried by an in-liquid guide roll with dipping it in a processing solution vessel filled with a processing solution. In such an automatic treatment, the treatment may be carried out with supplying a replenishing solution to each processing solution corresponding to throughput and operation time. Also, a so-called disposable treating system may be applied in which treatment is carried out using a substantially unused process solution.

As to the planographic printing plate precursor of the invention, in the case where an unnecessary image area (e.g., film edge trace on an original image film) is present on the planographic printing plate obtained by image exposure, developing and washing with water and/or rinsing and/or gumming drawing, the unnecessary image area is erased. Such an erasure is preferably made using a method in which an erasing solution as described in, for example, JP-B No. 2-13293 is applied to the unnecessary image area and allowed to stand for a fixed time as it is, followed by washing with water. A method as described in JP-A No. 59-174842 may be utilized wherein the unnecessary image area is irradiated with activated beams guided by an optical fiber and then developed.

The planographic printing plate obtained in the above manner may be subjected to a printing step after a protective gum is applied as desired. In the case of intending to obtain a planographic printing plate having higher printing durability, the planographic printing plate is subjected to burning treatment.

When the planographic printing plate is subjected to burning, it is preferable to treat it using a surface adjusting solution as described in JP-B Nos. 61-2518 and 55-28062 and JP-A Nos. 62-31859 and 61-159655 before burning.

As the method of burning, a method in which a sponge or absorbent cotton impregnated with the surface adjusting solution is used to apply this solution to the planographic printing plate or the printing plate is dipped in a pat filled with the surface adjusting solution to apply the solution to the printing plate and a method of applying the solution by using an automatic coater may be applied. Making the coating amount uniform by using a squeegee or squeegee roller after coating gives better results.

The amount of the surface adjusting solution is generally appropriately 0.03 to 0.8 g/m² (dry amount). The planographic printing plate to which the surface adjusting solution is applied is dried if necessary and then heated to high temperatures by a burning processor (e.g., a Burning Processor: "BP-1300" which is commercially available from Fuji Photo Film Co., Ltd.) or the like. The heating temperature and time in this case are preferably in a range from 180 to 300°C and in a range from 1 to 20 minutes respectively though depending on the type of component forming an image.

### EXAMPLES

The present invention will be explained in detail by way of examples. However, they are not intended to limit the invention.

### (Synthesis of a monomer (M-1))

A monomer (M-1) was synthesized in the following manner.

23.1 g (0.58 mol) of NaOH was added gradually to a 1 L three-neck flask charged with 46.55 g (0.35 mol) of iminodiacetic acid, 350 ml of MeOH and 350 ml of H₂O while the mixture was stirring at 60°C. Then, half of 53.5 g (0.35 mol) of chloromethylstyrene was added dropwise to the mixture over 30 minutes, 23.1 g (0.58 mol) of NaOH was further added, and the remaining half of the chloromethylstyrene was added dropwise to the mixture. Further, the resulting mixture was reacted at 60°C for 3 hours, and then, the reaction solution was decreased in amount to 1/3 of its original amount by removing solvent components, followed by extraction with methyl ethyl ketone. The water phase was adjusted to a pH level of 2 to 3 by adding concentrated hydrochloric acid. The precipitated white solid was filtered, washed with water and dried to obtain 29.3 g (yield: 33.6%) of a monomer (M-1). The structure of the monomer (M-1) is shown below.

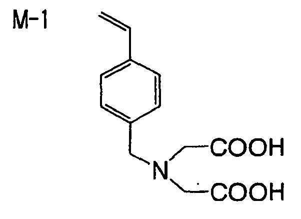

### (Synthesis of a specific polymer (P-5))

A specific polymer (P-5) was synthesized in the following manner.

A solution containing 12.5 g (50.0 mmol) of the above synthesized monomer (M-1), 7.41 g (50.0 mmol) of paravinylbenzoic acid, 1.152 g (5.0 mmol) of V601 and 37.1 g of DMAc was added dropwise in a 200 ml three-neck flask charged with 9.3 g of DMAc over 2 hours at 75°C in a nitrogen atmosphere and the mixture was reacted for further 5 hours. The reaction solution was reprecipitated from ethyl acetate, followed by filtration and drying to obtain 17.9 g of a specific polymer (P-5).

### (Synthesis of a specific polymer (P-6))

A specific polymer (P-6) was synthesized in the following manner.

A solution containing 12.5 g (50.0 mmol) of the above synthesized monomer (M-1), 12.69 g (50.0 mmol) of vinylbenzyltriethylammonium chloride, 1.152 g (5.0 mmol) of V601 and 47.0 g of DMAc was added dropwise in a 200 ml three-neck flask charged with 11.7 g of DMAc over 2 hours at 75°C in a nitrogen atmosphere and the mixture was reacted for further 5 hours. The reaction solution was reprecipitated from acetone, followed by filtration and drying to obtain 20.5 g of a specific polymer (P-6).

### (Synthesis of a specific polymer (P-11))

A specific polymer (P-11) was synthesized in the following manner.

A solution containing 4.99 g (20 mmol) of the above synthesized monomer (M-1), 3.81 g (15 mmol) of vinylbenzyltriethylammonium chloride, 1.95 g (15 mmol) of hydroxyethylmethacrylate, 0.576 g (2.5 mmol) of V601 and 47.0 g of DMAc was added dropwise in a three-neck flask charged with 5 g of DMAc over 2 hours at 75°C in a nitrogen atmosphere and the mixture was reacted for further 5 hours. The reaction solution was reprecipitated from acetone, followed by filtration and drying to obtain 9.8 g of a specific polymer (P-11).

### (Synthesis of a specific polymer (P-12))

A specific polymer (P-12) was synthesized in the following manner.

A solution containing 4.99 g (20 mmol) of the above monomer (M-1), 3.81 g (15 mmol) of vinylbenzyltriethylammonium chloride, 3.68 g (15 mmol) of Light Ester HOMS (manufactured by Kyoeisha Chemical Co., Ltd.), 0.576 g (2.5 mmol) of V601 and 30.0 g of DMAc was added dropwise in a three-neck flask charged with 7.5 g of DMAc over 2 hours at 75°C in a nitrogen atmosphere and the mixture was reacted for further 5 hours. The reaction solution was reprecipitated from acetone, followed by filtration and drying to obtain 9.8 g of a specific polymer (P-12).

### (Synthesis of a specific polymer (P-21))

A specific polymer (P-21) was synthesized in the following manner.

A solution containing 4.99 g (20 mmol) of the above monomer (M-1), 3.81 g (15 mmol) of vinylbenzyltriethylammonium chloride, 1.5 g (15 mmol) of methylmethacrylate, 0.576 g (2.5 mmol) of V601 and 33.0 g of DMAc was added dropwise in a three-neck flask charged with 8.2 g of DMAc over 2 hours at 75°C in a nitrogen atmosphere and the mixture was reacted for further 5 hours. The reaction solution was reprecipitated from acetone, followed by filtration and drying to obtain 9.6 g of a specific polymer (P-21).

### [Examples 1 to 5]

### (Production of a substrate)

The treatments shown below were carried out using a 0.3-mm-thick aluminum plate according to JIS A 1050 to produce a support 1 and a support 2.

### (a) Mechanical surface roughing treatment

Mechanical surface roughing treatment was carried out by a rotating roller-like nylon brush with supplying, as an abrasive slurry solution, a suspension of an abrasive agent (silica sand) having a specific gravity of 1.12 and water to the surface of the aluminum plate. The average particle diameter of the abrasive agent was 8 µm and the maximum particle diameter of the abrasive agent was 50 µm. The material of the nylon brush was 6·10 nylon wherein the hair length was 50 mm and the diameter of the hair was 0.3 mm. The nylon brush was obtained by opening holes in a stainless cylinder having a diameter of φ300 mm and by transporting hairs densely. Three rotary brushes were used. The distance between two support rollers (diameter: φ200 mm) under the brush was 300 mm. The brush roller was pressed to the aluminum plate until the load was increased to a load higher by 7 kW than that before it was pressed to the aluminum plate. The direction of the rotation of the brush was the same as the direction of the movement of the aluminum plate. The number of rotations of the brush was 200 rpm.

### (b) Alkali etching treatment

The aluminum plate obtained above was subjected to etching treatment performed using a 70°C aqueous NaOH solution (concentration: 26% by mass, ion concentration of aluminum: 6.5% by mass) by spraying to etch 6 g/m² of the aluminum plate, followed by rinsing with well water by spraying.

### (c) Desmatting treatment

Desmatting treatment was carried out using an aqueous 1% by mass nitric acid solution (containing 0.5% by mass of aluminum ions) kept at 30°C by spraying, followed by rinsing with water by spraying. As the aqueous nitric acid solution used in the desmutting treatment, a waste solution obtained in a step of carrying out electrochemical surface roughing treatment using AC in an aqueous nitric acid solution was used.

### (d) Electrochemical surface roughing treatment

Electrochemical surface roughing treatment was continuously carried out using an AC voltage of 60 Hz. The electrolytic solution used at this time was an aqueous solution containing 10.5 g/L of nitric acid (including 5 g/L of aluminum ions) and the temperature of this electrolytic solution was 50°C. As regards the AC power source, using trapezoidal rectangular wave AC wherein the time TP required for current value to reach a peak from 0 was 0.8 msec and the duty ratio was 1:1, electrochemical surface roughing treatment was carried out using a carbon electrode as a counter electrode. As the auxiliary anode, ferrite was used. The electrolytic vessel used was a radial cell type.

The current density was 30 A/dm² as a peak current and the quantity of electricity was 220 C/dm² as the total quantity of electricity when the aluminum plate was an anode. 5% of the current flowing from the power source was supplied separately to the auxiliary electrode.

Thereafter, the aluminum plate was rinsed with well water by spraying.

### (e) Alkali etching treatment

The aluminum plate was subjected to etching treatment carried out at 32°C using an aqueous solution containing 26% by mass of caustic soda and 6.5% by mass of aluminum ions by spraying to etch the aluminum plate in an amount of 0.20 g/m² to remove the smut component primarily containing aluminum hydroxide generated when performing foregoing electrochemical surface roughing treatment using AC and also to etch the edge part of the pit produced to thereby round the edge part. Then, the aluminum plate was rinsed with well water by spraying.

### (f) Desmutting treatment

An aqueous 15% by mass nitric acid solution (including 4.5% by mass of aluminum ions) was used to carry out desmutting treatment at 30°C by spraying, followed by washing with water by spraying. As the aqueous nitric acid solution used in the desmutting treatment, a waste solution in a step of carrying out electrochemical surface roughing treatment using AC in an aqueous nitric acid solution was used.

### (g) Electrochemical surface roughing treatment

Electrochemical surface roughing treatment was continuously carried out using an AC voltage of 60 Hz. The electrolytic solution used at this time was an aqueous solution containing 7.5 g/ L of hydrochloric acid (including 5 g/L of aluminum ions) and the temperature of this electrolytic solution was 35°C. The AC power source had a trapezoidal rectangular waveform. Electrochemical surface roughing treatment was carried out using a carbon electrode as a counter electrode. As the auxiliary anode, ferrite was used. The electrolytic vessel used was a radial cell type.

The current density was 25 A/dm² as a peak current and the quantity of electricity was 50 C/dm² as the total quantity of electricity when the aluminum plate was an anode.

Then the aluminum plate was rinsed with well water by spraying.

### (h) Alkali etching treatment

The aluminum plate was subjected to etching treatment carried out at 32°C using an aqueous solution containing 26% by mass of caustic soda and 6.5% by mass of aluminum ions by spraying to etch the aluminum plate in an amount of 0.10 g/m² to remove the smut component primarily containing aluminum hydroxide generated when performing foregoing electrochemical surface roughing treatment using AC and also to etch the edged part of the pit produced to thereby round the edged part. Then, the aluminum plate was rinsed with well water by spraying.

### (i) Desmutting treatment

An aqueous 25% by mass sulfuric acid solution (including 0.5% by mass of aluminum ions) was used to carry out desmutting treatment at 60°C by spraying, followed by rinsing with well water by spraying.

### (j) Anodic oxidation treatment

As the electrolytic solution, sulfuric acid was used. All the electrolytic solutions contained 170 g/L of sulfuric acid (including 0.5% by mass of aluminum ions) and were used at 43°C. Then, the support was rinsed with well water by spraying.

The current densities were each about 30 A/dm². The amount of the final oxide film was 2.7 g/m².

### (k) Alkali metal silicate treatment

The aluminum support obtained by the anodic oxidation treatment was dipped in a treating vessel filled with 1% by mass an aqueous solution of No. 3 sodium silicate kept at 30°C for 10 seconds to carry out alkali metal silicate treatment (silicate treatment). After that, the support was rinsed with well water by spraying. The amount of the silicate to be stuck in this case was 3.5 mg/dm².

### <Support 1>

The above steps (a) to (k) were carried out in this order, wherein the amount of etching in the step (e) was made to be 3.5 g/m² to produce a support 1.

### <Support 2>

The above steps (a) to (k) were carried out in this order in the same manner as in the production of the support 1 except that the steps (g), (h) and (i) were omitted, to produce a support 2.

### (Formation of an intermediate layer)

The following intermediate layer-forming coating solution was applied to the support 1 produced as aforementioned and then dried at 80°C for 15 seconds to dispose an intermediate layer. The coating amount after drying was 15 mg/m².

### <Intermediate layer-forming coating solution>

·Specific polymer described in Table 1 0.3 g
·Methanol 100 g
·Water 1 g

### (Formation of a recording layer)

### -Synthesis of a copolymer 1-

A 500 ml three-neck flask equipped with a stirrer, a cooling tube and a dropping funnel was charged with 31.0 g (0.36 mol) of methacrylic acid, 39.1 g (0.36 mol) of ethyl chloroformate and 200 ml of acetonitrile and the mixture was stirred under cooling in an ice-water bath. 36.4 g (0.36 mol) of triethylamine was added dropwise to the mixture over about 1 hour by using the dropping funnel. After the addition was completed, the ice-water bath was taken away and the mixture was stirred at room temperature for 30 minutes.

51.7 g (0.30 mol) of p-aminobenzenesulfonamide was added to the reaction mixture, which was then stirred for 1 hour under heating at 70°C in an oil bath. After the reaction was finished, this mixture was poured into 1 1 of water with stirring the water and the resulting mixture was stirred for 30 minutes. The mixture was subjected to filtration to collect the precipitate, which was then made into a slurry by using 500 ml of water. This slurry was subjected to filtration and the resulting solid was dried to obtain a white solid of N-(p-aminosulfonylphenyl)methacrylamide (yield: 46.9 g).

Next, a 200 ml three-neck flask equipped with a stirrer, a cooling tube and a dropping funnel was charged with 4.61 g (0.0192 mol) of N-(p-aminosulfonylphenyl)methacrylamide, 2.58 g (0.0258 mol) of ethylmethacrylate, 0.80 g (0.015 mol) of acrylonitrile and 20 g of N-dimethylacetamide and the mixture was stirred under heating at 65°C in a hot-water bath. 0.15 g of 2,2'-azobis(2,4-dimethylvaleronitrile) (trade name: "V-65", manufactured by Wako Pure Chemical Co., Ltd.) was added as an initiator to this mixture, which was then stirred for 2 hours in a nitrogen atmosphere with keeping the mixture at 65°C. A mixture of 4.61 g of N-(p-aminosulfonylphenyl)methacrylamide, 2.58 g of methylmethacrylate, 0.80 g of acrylonitrile, 20 g of N,N-dimethylacetamide and 0.15 g of the above "V-65" was further added dropwise to this reaction mixture over 2 hours by the dropping funnel. After the addition was completed, the resulting mixture was further stirred at 65°C for 2 hours. After the reaction was finished, 40 g of methanol was added to the reaction mixture, which was then cooled and the resulting mixture was poured into 2 1 of water with stirring the water, and then the mixture was stirred for 30 minutes. The precipitate was taken out by filtration and dried to obtain 15 g of a white solid. The weight average molecular weight (based on polystyrene) of this specific copolymer 1 was measured by gel permeation chromatography to find that it was 54,000.

### (Formation of recording layers in Examples 1 and 3 to 7)

The following recording layer-forming coating solution 1 was applied to the support (each type is described in Table 1) obtained above such that the coating amount was 0.85 g/m² and then dried at 110°C for 50 seconds in PERFECT OVENPH200 manufactured by TABAI wherein Wind Control was set to 7. Thereafter, the recording layer-forming coating solution 2 was applied to the recording layer 1 such that the coating amount was 0.30 g/m² and then dried at 120°C for 1 minute to obtain panographic printing plate precursors of Examples 1 and 3 to 7.

### <Recording layer-forming coating solution 1>

·The aforementioned copolymer 1 2.133 g
·Cyanine dye A (the following structure) 0.109 g
·4,4'-Bishydroxyphenylsulfone 0.126 g
·Tetrahydrophthalic acid anhydride 0.190 g
·p-Toluenesulfonic acid 0.008 g
·3-Methoxy-4-diazophenylamine hexafluorophosphate 0.030 g
·Ethyl violet (the counter anion is changed to a 6-hydroxy-2-naphthalenesulfonic acid anion) 0.100 g
·MEGAFAC F780 (surfactant improving coating surface condition) manufactured by Dainippon Ink and Chemicals, Inc.) 0.035 g
·Methyl ethyl ketone 25.38 g
·1-Methoxy-2-propanol 13.0 g
·γ-butyrolactone 13.2 g

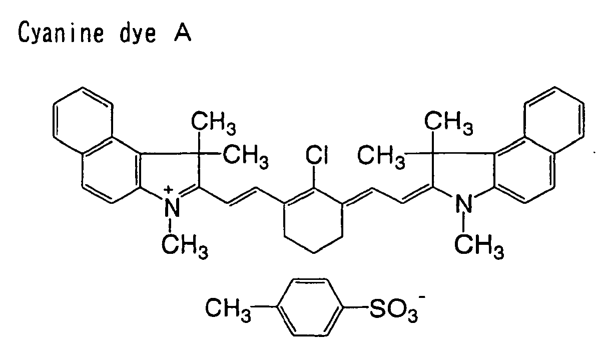

### <Recording layer-forming coating solution 2>

·m, p-Cresol novolac (m/p ratio = 6/4, weight average molecular weight: 4500, containing 0.8% by mass of unreacted cresol) 0.3478 g
·Cyanine dye A described above 0.0192 g
·Onium salt B described below 0.0115 g
·MEGAFAC F780 (20%) (surfactant improving coating surface condition) manufactured by Dainippon Ink and Chemicals, Inc.) 0.022 g
·Methyl ethyl ketone 13.07 g
·1-Methoxy-2-propanol 6.79 g

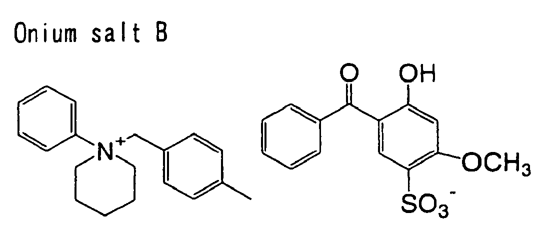

### (Formation of recording layers of Examples 2, 8 and 9)

The following image forming layer coating solution 3 was applied to the support 1 obtained above such that the coating amount was 1.2 g/m² to obtain planographic printing plate precursors of Examples 2, 8 and 9.

### <Recording layer-forming coating solution 3>

m, p-Cresol novolac (m/p ratio = 6/4, weight average molecular weight: 7,300, containing 0.4% by mass of unreacted cresol) 0.93 g
·Vinyl polymer (1) described below 0.07 g
·Infrared absorbing agent described below (cyanine dye A) 0.017 g
·Infrared absorbing agent described below (cyanine dye B) 0.023 g
·2,4,6-Tris(hexyloxy)benzenediazonium-2-hydroxy-4-methoxybenzophenone-5-sulfonate 0.01 g
·p-Toluenesulfonicacid 0.003 g
·Cyclohexane-1,2-dicarboxylic acid anhydride 0.06 g
·Dye obtained by replacing the counter anion of Victoria Blue BOH with a 1-naphthalenesulfonic acid anion 0.015 g
·Fluorine type surfactant (MEGAFACE F-176, manufactured by Dainippon Ink and Chemicals, Inc.) 0.02 g
·Methyl ethyl ketone 15 g
·1-Methoxy-2-propanol 7g

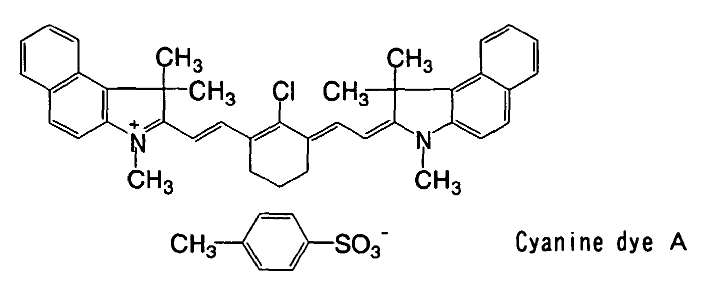

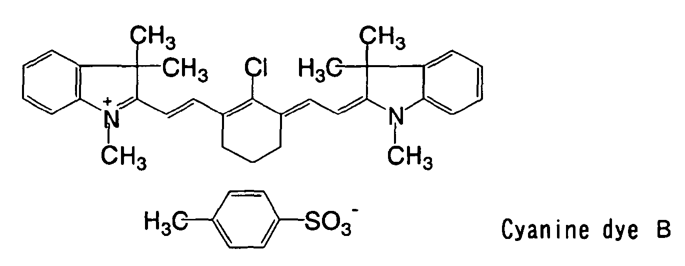

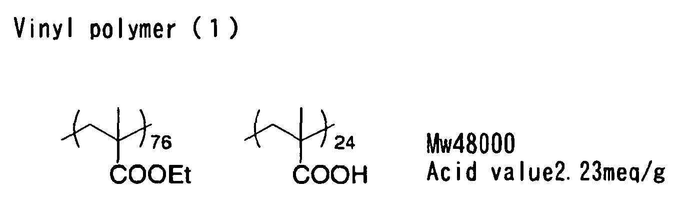

### [Comparative Example 1]

A planographic printing plate precursor of Comparative Example 1 was obtained in the same manner as in Example 1 except that the following comparative polymer (PA-1) was used in place of the specific polymer (P-1) in the intermediate layer-forming coating solution of Example 1.

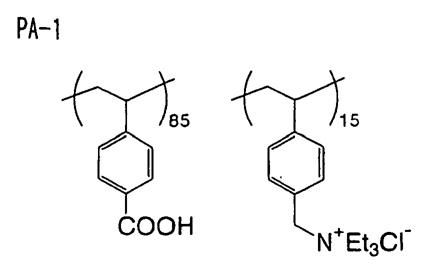

### [Comparative Example 2]

A planographic printing plate precursor of Comparative Example 2 was obtained in the same manner as in Example 1 except that the intermediate layer was not provided as in Example 1.

### [Evaluation]

Each planographic printing plate precursor obtained in Examples 1 to 9 and Comparative Examples 1 and 2 was evaluated as to image forming ability, printing durability, the presence or absence of scumming in the non-image area, and storage stability (printing durability and the presence or absence of scumming in the non-image area over time) in the following manner.

### 1. Image forming ability

Each planographic printing precursor obtained in Examples and Comparative Examples was exposed imagewise at a surface energy of 140 mJ/cm² by using a Trendsetter 3244 manufactured by CREO. Next, each planographic printing plate precursor obtained in Examples 1 to 6 and Comparative Examples 1 and 2 was developed using a developing solution "DT-1" for a PS plate, which is a developing solution containing substantially no alkali metal silicate and is manufactured by Fuji Photo Film Co., Ltd., in an automatic developing machine 900 NP and was then evaluated as to whether or not the image was exactly reproduced.

The planographic printing plate precursor of Example 7 was developed and evaluated in the same manner as above by using a developing solution (developing solution "DP-4" for a PS plate, manufactured by Fuji Photo Film Co., Ltd.) containing an alkali metal silicate.

Each planographic printing plate precursor obtained in Examples 8 and 9 was developed and evaluated using a developing solution "LH-DS" for a PS plate, manufactured by Fuji Photo Film Co., Ltd., under standard usage conditions.

The standard of evaluation was as follows. A case where an image having very high sharpness was formed based on digital information was defined as "A", a case where there was no practical problem was defined as "B", a case where an image was not formed precisely was defines as "C", and a case where no image was formed was defined as "D".

The results are shown in Table 1.

### 2. Evaluation of the scumming property of a non-image area

Each planographic printing plate precursor obtained by carrying out the same exposure and developing treatment as above in 1 was used to carry out printing in a Mitsubishi Dia Model F2 printer (manufactured by MITSUBISHI HEAVY INDUSTRIES, LTD.) using DIC-GEOS (s) Red ink to visually evaluate blanket scumming after 10,000 sheets were printed.

The standard of evaluation was as follows. A case where no scumming was observed was defined as "A", a case where almost no scumming was observed was defined as "B", a case where little scumming was observed was defined as "C", and a case where significant scumming was observed was defined as "D". The results are shown in Table 1.

### 3. Evaluation of printing durability

Each planographic printing plate precursor obtained by carrying out the same exposure and developing treatment as above in 1 was used to carry out printing in a Lithrone printer manufactured by Komori Corporation using DIC-GEOS (N) Chinese ink manufactured by Dainippon Ink and Chemicals, Inc. evaluate printing durability by the number of prints when it was confirmed visually that the density of a solid image started to drop. The results are shown in Table 1.

### 4. Storage stability

Obtained plate precursors were stored at 35°C under a relative humidity of 75% for 21 days to evaluate printing durability and the scumming property of a non-image area in the same method as in above in 2 and 3. Those exhibiting less change in these characteristics from before to after the storage were judged to have better stability over time. The results are shown in Table 1.

**Table 1**

| | Support | Intermediate layer polymer | Recording layer-forming coating solution | Developer | Image forming ability | Printing durability (× 10⁴ sheets) | Scumming property of a non-image area | Printing durability (× 10⁴ sheets) with time | Scumming property of a non-image area with time |
|---|---|---|---|---|---|---|---|---|---|
| Example 1 | 1 | P-5 | Coating Solution 1, 2 | DT-1 | A | 9.5 | A | 9.5 | A |
| Example 2 | 1 | P-6 | Coating Solution 3 | DT-1 | A | 9.5 | A | 9.5 | A |
| Example 3 | 2 | P-5 | Coating Solution 1, 2 | DT-1 | A | 9.0 | A | 9.0 | A |
| Example 4 | 1 | P-11 | Coating Solution 1, 2 | DT-1 | A | 10.0 | A | 10.0 | A |
| Example 5 | 1 | P-12 | Coating Solution 1, 2 | DT-1 | A | 10.0 | A | 10.0 | A |
| Example 6 | 1 | P-21 | Coating Solution 1, 2 | DT-1 | A | 10.0 | A | 10.0 | A |
| Example 7 | 1 | P-11 | Coating Solution 1, 2 | DP-4 | A | 10.0 | A | 10.0 | A |
| Example 8 | 1 | P-6 | Coating Solution 3 | LH-DS | A | 9.5 | A | 9.5 | A |
| Example 9 | 1 | P-21 | Coating Solution 3 | LH-DS | A | 10.0 | A | 10.0 | A |
| Comparative Example 1 | 1 | PA-1 | Coating Solution 1, 2 | DT-1 | A | 8:0 | A | 7.0 | C |
| Comparative Example 2 | 1 | - | Coating Solution 1, 2 | DP-1 | C | 5:5 | D | 5.0 | D |

As shown in Table 1, it was found that the planographic printing plate precursors of Examples which contain the specific polymer in the intermediate layer are superior in image forming ability and also in printing durability and scumming property of a non-image area. The polymer (PA-1) used in Comparative Example 1 is a polymer which is commonly used in the intermediate layer of conventional planographic printing plate precursors. It is understood from a comparison between Comparative Example 1 and Example 1, which were produced under the same condition except for the intermediate layer, that the printing durability is further improved while maintaining good image forming ability and scumming property of a non-image area by including the specific polymer in the intermediate layer. It is also understood that Comparative Example 2 provided with no intermediate layer is inferior to Examples in printing durability and scumming property of a non-image area.

Also, the planographic printing plate precursors of the invention were not changed in either of printing durability and scumming property of a non-image area over time and were therefore found to be superior in storage stability. In contrast, it is understood that both printing durability and scumming property of a non-image area of the planographic printing plate precursor of Comparative Example 1 were deteriorated over time.

Moreover, it is understood that the planographic printing plate precursor of the invention can be well developed in developing treatment using any developing solution.

## Claims

1. A planographic printing plate precursor comprising an intermediate layer containing a polymer having a structure represented by the following formula (I) at its side chain and an infrared laser photosensitive positive recording layer containing an infrared absorbing agent disposed on a support in this order: 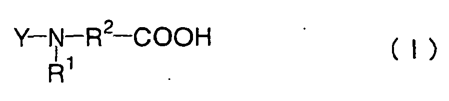 wherein Y represents a connecting group connected with a main chain of the polymer; R¹ represents a hydrocarbon group substituted with a carboxylic acid group, and R² is a straight-chain hydrocarbon group or a hydrocarbon group substituted with a carboxylic acid group.

2. A planographic printing plate precursor according to claim 1, wherein in the formula (I), R¹ is an alkyl group substituted with a carboxylic acid group, and R² is a straight-chain alkylene group.

3. A planographic printing plate precursor according to claim 1, wherein in the structure represented by the formula (I) is a structure represented by the following formula (I-a), and 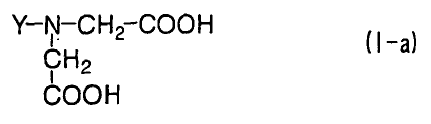 the connecting group represented by Y is a structure selected from the following structures.

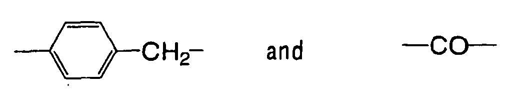

4. A planographic printing plate precursor according to claim 1, wherein a content of the structure represented by the formula (I) in the polymer is 5% by mole or more.

5. A planographic printing plate precursor according to claim 1, wherein the polymer is a polymer obtained by copolymerizing a monomer having the structure represented by the formula (I) with another monomer.

6. A planographic printing plate precursor according to claim 5, wherein the another monomer is a monomer having an onium group.

7. A planographic printing plate precursor according to claim 5, wherein the another monomer is a monomer having an acidic group.

8. A planographic printing plate precursor according to claim 5, wherein the another monomer is a monomer having a functional group that is capable of interaction with the recording layer.

9. A planographic printing plate precursor according to claim 1, wherein a content of the polymer in the intermediate layer is 50 to 100% by mass based on a total solid content constituting the intermediate layer.

10. A planographic printing plate precursor according to claim 1, wherein a weight average molecular weight of the polymer is 500 to 1,000,000.

11. A planographic printing plate precursor according to claim 1, wherein a coating amount of the intermediate layer after drying is 1 to 100 mg/m².

12. A planographic printing plate precursor according to claim 1, wherein the recording layer contains an alkali-soluble resin.

13. A planographic printing plate precursor according to claim 12, wherein the alkali-soluble resin has an acidic group selected from the group consisting of a phenolic hydroxyl group, a sulfonamide group, a substituted sulfonamide acidic group, a carboxylic acid group, a sulfonic acid group and a phosphoric acid group.

14. A planographic printing plate precursor according to claim 1, wherein the infrared absorbing agent is a cyanine dye.

15. A planographic printing plate precursor according to claim 1, wherein the recording layer has a multilayer structure.

16. A planographic printing plate precursor according to claim 1, wherein the support is a support that has undergone hydrophilicizing treatment using an alkali metal silicate.

## Patentansprüche

1. Flachdruckplattenvorläufer, umfassend auf einem Träger in dieser Reihenfolge angeordnet eine Zwischenschicht, die ein Polymer enthält, das eine durch die folgende Formel (I) repräsentierte Struktur in dessen Seitenkette aufweist, und eine gegenüber Infrarotlaser fotoempfindliche, positive Aufzeichnungsschicht, die einen Infrarotabsorber enthält: 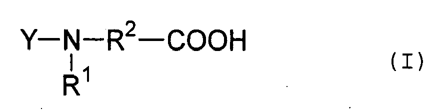 worin Y eine verbindende Gruppe darstellt, die mit einer Hauptkette des Polymers verbunden ist; R¹ eine Kohlenwasserstoffgruppe darstellt, die mit einer Carbonsäuregruppe substituiert ist, und R² eine geradkettige Kohlenwasserstoffgruppe oder eine Kohlenwasserstoffgruppe, die mit einer Carbonsäuregruppe substituiert ist, ist.

2. Flachdruckplattenvorläufer gemäß Anspruch 1, worin in der Formel (I) R¹ eine Alkylgruppe ist, die mit einer Carbonsäuregruppe substituiert ist, und R² eine geradkettige Alkylengruppe ist.

3. Flachdruckplattenvorläufer gemäß Anspruch 1, worin in der durch die Formel (I) repräsentierten Struktur eine durch die folgende Formel (I-a) repräsentierte Struktur ist 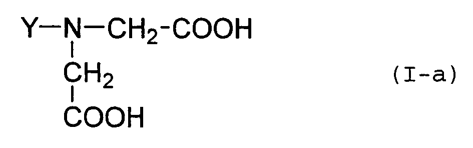 und die durch Y dargestellte verbindende Gruppe eine Struktur ist, die aus den folgenden Strukturen ausgewählt ist:

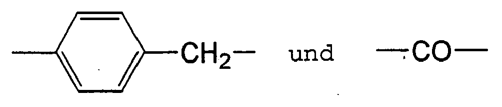

4. Flachdruckplattenvorläufer gemäß Anspruch 1, worin der Gehalt der durch die Formel (I) repräsentierten Struktur in dem Polymer 5 mol% oder mehr beträgt.

5. Flachdruckplattenvorläufer gemäß Anspruch 1, worin das Polymer ein Polymer ist, das durch Copolymerisieren eines Monomers, das die durch die Formel (I) repräsentierte Struktur aufweist, mit einem anderen Monomer erhalten wird.

6. Flachdruckplattenvorläufer gemäß Anspruch 5, worin das andere Monomer ein Monomer ist, das eine Oniumgruppe aufweist.

7. Flachdruckplattenvorläufer gemäß Anspruch 5, worin das andere Monomer ein Monomer ist, das eine saure Gruppe aufweist.

8. Flachdruckplattenvorläufer gemäß Anspruch 5, worin das andere Monomer ein Monomer ist, das eine funktionelle Gruppe aufweist, die mit der Aufzeichnungsschicht wechselwirken kann.

9. Flachdruckplattenvorläufer gemäß Anspruch 1, worin der Gehalt des Polymers in der Zwischenschicht 50 bis 100 Massen% beträgt, bezogen auf die gesamten festen Inhaltsstoffe, die die Zwischenschicht aufbauen.

10. Flachdruckplattenvorläufer gemäß Anspruch 1, worin das gewichtsgemittelte Molekulargewicht des Polymers 500 bis 1.000.000 beträgt.

11. Flachdruckplattenvorläufer gemäß Anspruch 1, worin die Beschichtungsmenge der Zwischenschicht nach dem Trocknen 1 bis 100 mg/m² beträgt.

12. Flachdruckplattenvorläufer gemäß Anspruch 1, worin die Aufzeichnungsschicht ein Alkali-lösliches Harz enthält.

13. Flachdruckplattenvorläufer gemäß Anspruch 12, worin das Alkali-lösliche Harz eine saure Gruppe aufweist, die aus der Gruppe ausgewählt ist, die aus einer phenolischen Hydroxylgruppe, einer Sulfonamidgruppe, einer substituierten sauren Sulfonamidgruppe, einer Carbonsäuregruppe, einer Sulfonsäuregruppe und einer Phosphorsäuregruppe besteht.

14. Flachdruckplattenvorläufer gemäß Anspruch 1, worin der Infrarotabsorber ein Cyaninfarbstoff ist.

15. Flachdruckplattenvorläufer gemäß Anspruch 1, worin die Aufzeichnungsschicht eine Multischichtstruktur aufweist.

16. Flachdruckplattenvorläufer gemäß Anspruch 1, worin der Träger ein Träger ist, der einer hydrophilisierenden Behandlung unter Verwendung eines Alkalimetallsilikats unterzogen worden ist.

## Revendications

1. Précurseur de plaque d'impression planographique comprenant une couche intermédiaire contenant un polymère ayant une structure représentée par la formule (1) suivante au niveau de sa chaîne latérale et une couche d'enregistrement positive photosensible à un laser infrarouge contenant un agent absorbant l'infrarouge disposées sur un support dans cet ordre : 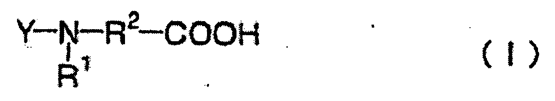 formule dans laquelle, Y représente un groupe de liaison lié à une chaîne principale du polymère ; R¹ représente un groupe hydrocarboné substitué par un groupe acide carboxylique, et R² est un groupe hydrocarboné à chaîne linéaire ou un groupe hydrocarboné substitué par un groupe acide carboxylique.

2. Précurseur de plaque d'impression planographique selon la revendication 1, dans lequel, dans la formule (I), R¹ est un groupe alkyle substitué par un groupe acide carboxylique, et R² est un groupe alkylène à chaîne linéaire.

3. Précurseur de plaque d'impression planographique selon la revendication 1, dans lequel la structure représentée par la formule (I) est une structure représentée par la formule (I-a) suivante, et 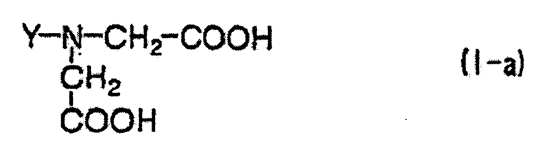 le groupe de liaison représenté par Y est une structure sélectionée parmi les structures suivantes :

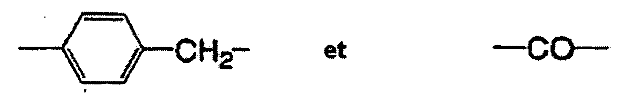

4. Précurseur de plaque d'impression planographique selon la revendication 1, dans lequel un contenu de la structure représentée par la formule (1) dans le polymère est de 5 % en mole ou davantage.

5. Précurseur de plaque d'impression planographique selon la revendication 1, dans lequel le polymère est un polymère obtenu en copolymérisant d'un monomère ayant la structure représentée par la formule (I) avec un autre monomère.

6. Précurseur de plaque d'impression planographique selon la revendication 5, dans lequel l'autre monomère est un monomère ayant un groupe onium.

7. Précurseur de plaque d'impression planographique selon la revendication 5, dans lequel l'autre monomère est un monomère ayant un groupe acide.

8. Précurseur de plaque d'impression planographique selon la revendication 5, dans lequel l'autre monomère est un monomère ayant un groupe fonctionnel qui est capable d'interaction avec la couche d'enregistrement.

9. Précurseur de plaque d'impression planographique selon la revendication 1, dans lequel un contenu du polymère dans la couche intermédiaire est de 50 à 100 % en masse sur base d'un contenu solide total constituant la couche intermédiaire.

10. Précurseur de plaque d'impression planographique selon la revendication 1, dans lequel une masse moléculaire moyenne en poids du polymère est de 500 à 1 000 000.

11. Précurseur de plaque d'impression planographique selon la revendication 1, dans lequel une quantité du revêtement de la couche intermédiaire après séchage est de 1 à 100 mg/m².

12. Précurseur de plaque d'impression planographique selon la revendication 1, dans lequel la couche d'enregistrement contient une résine soluble en milieu alcalin.

13. Précurseur de plaque d'impression planographique selon la revendication 12, dans lequel la résine soluble en milieu alcalin a un groupe acide sélectionné dans le groupe constitué par un groupe hydroxyle phénolique, un groupe sulfonamide, un groupe acide sulfonamide substitué, un groupe acide carboxylique, un groupe acide sulfonique et un groupe acide phosphorique.

14. Précurseur de plaque d'impression planographique selon la revendication 1, dans lequel l'agent absorbant l'infrarouge est un colorant cyanine.

15. Précurseur de plaque d'impression planographique selon la revendication 1: dans lequel la couche d'enregistrement a une structure multicouche.

16. Précurseur de plaque d'impression planographique selon la revendication 1, dans lequel le support est un support qui a subi un traitement d'hydrophilisation en utilisant un silicate de métal alcalin.
